(19) Europäisches Patentamt
European Patent Office
Office européen des brevets

(11) EP 4 365 250 A1

(12) **EUROPEAN PATENT APPLICATION**
published in accordance with Art. 153(4) EPC

(43) Date of publication:
**08.05.2024 Bulletin 2024/19**

(21) Application number: **22832456.2**

(22) Date of filing: **09.03.2022**

(51) International Patent Classification (IPC):
***C09D 129/04*** (2006.01) ***B32B 27/30*** (2006.01)
***C09D 5/00*** (2006.01) ***C09D 7/61*** (2018.01)
***C09D 7/63*** (2018.01) ***C09D 11/101*** (2014.01)

(52) Cooperative Patent Classification (CPC):
**B32B 27/30; C09D 5/00; C09D 7/61; C09D 7/63; C09D 11/101; C09D 129/04;** Y02W 90/10

(86) International application number:
**PCT/JP2022/010170**

(87) International publication number:
**WO 2023/276291 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 JP 2021108905**
**27.01.2022 JP 2022011063**

(71) Applicant: **Sakata INX Corporation**
**Osaka-shi, Osaka 550-0002 (JP)**

(72) Inventors:
- **NAKASHIMA, Okinori**
  **Osaka-shi, Osaka 550-0002 (JP)**
- **OHKI, Makoto**
  **Osaka-shi, Osaka 550-0002 (JP)**
- **MYOSE, Takuya**
  **Osaka-shi, Osaka 550-0002 (JP)**
- **FUKE, Kazuhiro**
  **Osaka-shi, Osaka 550-0002 (JP)**

(74) Representative: **Grünecker Patent- und Rechtsanwälte**
**PartG mbB**
**Leopoldstraße 4**
**80802 München (DE)**

(54) **MIGRATION-PREVENTING COATING AGENT**

(57) An object is to form a layer capable of dependably preventing a migration of ink compositions. As a solution, an anti-migration coating agent is provided that contains a polyvinyl alcohol-based copolymer resin having a structural unit expressed by formula (1) below in the molecule (component A), and a polyvinyl alcohol-based (co)polymer resin having carbonyl groups in the molecule (component B).

[Chem. 1]

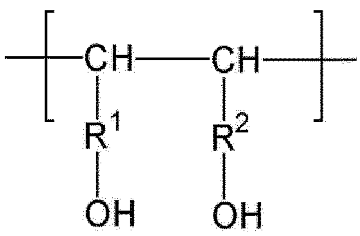

(1)

(In formula (1), $R^1$ and $R^2$ each independently represent a hydrocarbon group with 1 to 3 carbon atoms.)



Processed by Luminess, 75001 PARIS (FR)

## Description

### Technical Field

The present invention relates to an anti-migration coating agent for forming an anti-migration layer between a layer obtained from an ink composition and the surface of a base material, as well as a laminate constituted with an anti-migration coating agent layer formed thereon.

### Background Art

As described in Patent Literature 1, resin compositions containing polyvinyl alcohols, and inorganic layered compounds that serve as gas barrier resin compositions, as well as gas barrier films constituted by films having layers formed by applying such resin compositions, are public knowledge.

Also, as described in Patent Literature 2, base materials having gas barrier layers provided thereon, wherein the gas barrier layers comprise carbonyl group-containing vinyl alcohol-based polymers, crosslinking agents, and inorganic layered compounds, are also public knowledge.

Furthermore, a practice, when printing on food packaging using ink compositions, has been to prevent food contamination caused by migration of ink compositions by taking measures on the packaging materials themselves or on the packaging structures.

### Background Art Literature

### Patent Literature

Patent Literature 1: Japanese Patent Laid-open No. Hei 6-93133
Patent Literature 2: Japanese Patent Laid-open No. 2005-288948

### Summary of the Invention

### Problems to Be Solved by the Invention

As described in each of the aforementioned patent literatures, an art of forming an inorganic layered compound-containing polyvinyl alcohol resin layer for the purpose of adding gas barrier property to a resin film, is known. Gas barrier property, as it pertains to a resin film, is a property that is intended, when a food container is constituted using the resin film, for example, to prevent the food from oxidizing, etc., and thereby improve its storage life. Therefore, this polyvinyl alcohol resin layer is a layer that prevents gases from permeating through it, but does not prevent an ink layer formed on top of the polyvinyl alcohol resin layer from migrating into it.

In other words, it cannot be said that a layer that prevents gases from permeating through it can also prevent an ink layer containing an ink composition from migrating into it immediately after printing. A layer that prevents gases from permeating through it normally prevents permeation of oxygen, nitrogen, and water vapor; if the layer is intended to prevent migration, however, the assumption must be that it will come in contact with solvents, polymerizable components, and other liquid components, etc., that are contained in greater amounts in the ink composition than the gases.

This is why a statement that gas barrier layers can also prevent migration is not necessarily true, and none of the attempts to form a layer that can dependably prevent migration of ink compositions have been successful so far.

### Means for Solving the Problems

As a result of studying in earnest to solve the aforementioned problems, the inventors of the present invention found that the aforementioned problems could be solved by an anti-migration coating agent having a specific compositional makeup, and eventually completed the present invention.

To be specific, the present invention is as follows.

1. An anti-migration coating agent containing a polyvinyl alcohol-based copolymer resin having a structural unit expressed by formula (1) below in the molecule (component A), and a polyvinyl alcohol-based (co)polymer resin having carbonyl groups in the molecule (component B).

[Chem. 1]

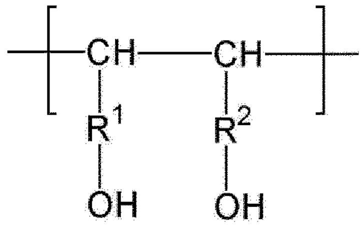

(1)

(In formula (1), $R^1$ and $R^2$ each independently represent a hydrocarbon group with 1 to 3 carbon atoms.)

2. The anti-migration coating agent according to 1, satisfying conditions 1 to 3 below.

Condition 1: When the mass of component A, and the mass of component B, contained in the anti-migration coating agent, are given by WA and WB, respectively, WA/WB is 80/20 to 20/80.

Condition 2: Only when crosslinking agents are contained, and when the mass of the crosslinking agents contained in the anti-migration coating agent is given by WC, WB/WC is 95/5 to 60/40.

Condition 3: Only when inorganic layered materials are contained, and when the mass of the inorganic layered materials contained in the anti-migration coating agent is given by WD, (WA+WB)/WD is 95/5 to 70/30.

3. The anti-migration coating agent according to 1 or 2, wherein component A is a saponified product of a copolymer comprising radical polymerizable monomers including radical polymerizable monomers expressed by formula (2) below and vinyl ester-based monomers.

[Chem. 2]

$$R^3O\text{-}R^1\text{-}CH{=}CH\text{-}R^2\text{-}OR^4 \qquad (2)$$

(In formula (2), $R^1$ and $R^2$ each independently represent a hydrocarbon group with 1 to 3 carbon atoms, Rand $R^4$ each independently represent a hydrogen atom or $-COR^5$ group, and $R^5$ represents a hydrocarbon group with 1 to 8 carbon atoms that may also have halogen groups, hydroxyl groups, ester groups, carboxylic acid groups, or sulfonic acid groups.)

4. The anti-migration coating agent according to any one of 1 to 3, wherein component A is a polyvinyl alcohol-based copolymer resin expressed by formula (3) below.

[Chem. 3]

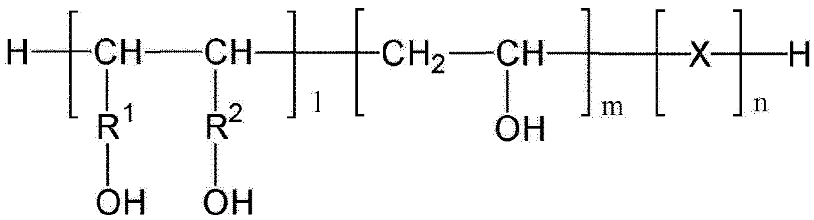

(3)

(In formula (3), $R^1$ and $R^2$ each independently represent a hydrocarbon group with 1 to 3 carbon atoms, and X represents a structural unit which is derived from a molecular structure comprising radical polymerizable monomers including radical polymerizable monomers expressed by formula (2) and vinyl ester-based monomers and which is different from other repeating structural units in formula (3). Also, l, m, and n each represent an average number of structural units per molecule, where the relationships of $l+m+n = 300$ to 4000, $l/(l+m+n) = 0.001$ to 0.200, $m/(l+m+n) = 0.700$ to 0.999, and $n/(l+m+n) = 0$ to 0.100 are satisfied.)

5. The anti-migration coating agent according to any one of 1 to 4, wherein component B is a vinyl alcohol-based (co)polymer resin satisfying condition 4 and/or condition 5 below.

Condition 4: It is a saponified product of a copolymer comprising radical polymerizable monomers including vinyl ester-based monomers and carbonyl group-containing radical polymerizable monomers.

Condition 5: It is an acetoacetylated product of a saponified product of a (co)polymer comprising radical polymerizable monomers including vinyl ester-based monomers.

6. The anti-migration coating agent according to 4, wherein component B is a polyvinyl alcohol-based (co)polymer resin containing, in the molecule, structural units expressed by formula (4) below and/or structural units expressed by formula (5) below.

[Chem. 4]

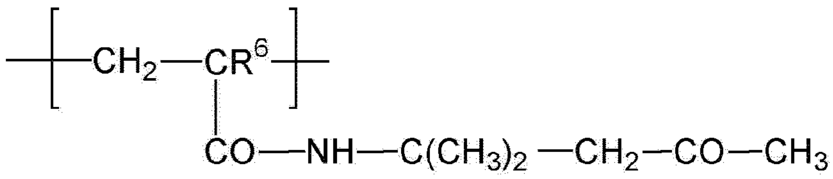

(4)

[Chem. 5]

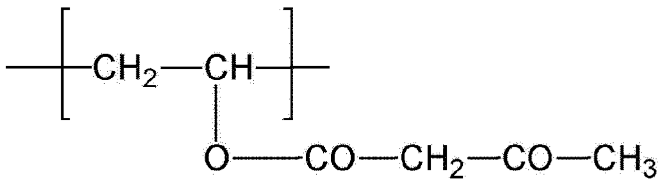

(5)

(In formula (4), $R^6$ represents hydrogen or a methyl group.)

7. The anti-migration coating agent according to 5 or 6, wherein component B is a polyvinyl alcohol-based (co)polymer resin expressed by formula (6) below.

[Chem. 6]

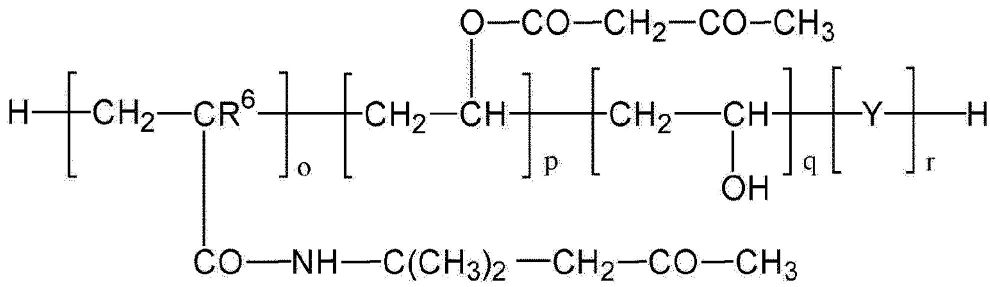

(6)

(In formula (6), $R^6$ represents hydrogen or a methyl group. Also, Y represents a structural unit which is derived from a molecular structure of any of the radical polymerizable monomers including the vinyl ester-based monomers and/or carbonyl group-containing radical polymerizable monomers and which is different from other repeating structural units in formula (6). Also, o, p, q, and r each represent an average number of structural units per molecule, where the relationships of o+p+q+r = 300 to 4000, (o+p)/(o+p+q+r) = 0.001 to 0.250, q/(o+p+q+r) = 0.550 to 0.999, and r/(o+p+q+r) = 0 to 0.200 are satisfied.)

8. The anti-migration coating agent according to any one of 1 to 7, further containing inorganic layered materials.

9. The anti-migration coating agent according to any one of 1 to 8, containing organic phosphorus compounds.

10. The anti-migration coating agent according to any one of 1 to 9, not containing crosslinking agents.

11. The anti-migration coating agent according to any one of 1 to 10, further containing crosslinking agents.

12. The anti-migration coating agent according to any one of 1 to 11, for undercoating before active energy ray-curable ink compositions are applied.

13. A laminate constituted by providing, on a base material, a layer formed by the anti-migration coating agent according to any one of 1 to 12.

14. An anti-migration coating agent containing a polyvinyl alcohol-based copolymer resin having a structural unit expressed by formula (1) below in the molecule (component A), or a polyvinyl alcohol-based (co)polymer resin having carbonyl groups in the molecule (component B).

[Chem. 1]

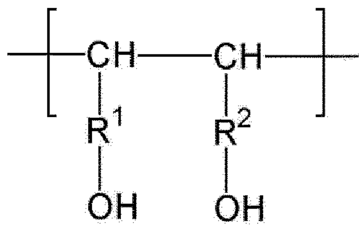

(1)

(In formula (1), $R^1$ and $R^2$ each independently represent a hydrocarbon group with 1 to 3 carbon atoms.)

15. The anti-migration coating agent according to 14, further containing inorganic layered materials and satisfying condition A below.

Condition A: When the mass of component A or component B, and the mass of the inorganic layered materials, contained in the anti-migration coating agent, are given by WAB and WD, respectively, WAB/WD is 90/10 to 62/38.

16. A laminate constituted by providing, on a base material, a layer formed by the anti-migration coating agent according to 14 or 15.

**Effects of the Invention**

The anti-migration coating agent proposed by the present invention offers excellent anti-migration property that makes it sufficiently usable in food packaging applications, while also featuring excellent adhesion to resin and other base materials as well as excellent adhesion to ink layers provided thereon.

**Mode for Carrying Out the Invention**

The anti-migration coating agent proposed by the present invention and layers formed thereby are explained below.

It should be noted that, under the present invention, the polyvinyl alcohol-based copolymer resin (component A) and polyvinyl alcohol-based copolymer resin (component B) below may both be used, or only one of them may be used.

(Polyvinyl Alcohol-based Copolymer Resin (Component A)) (It may be hereinafter referred to simply as "component A.")

For the polyvinyl alcohol-based copolymer resin (component A) under the present invention, polyvinyl alcohol-based copolymer resins having a structural unit expressed by formula (1) below in the molecule (component A), which are polyvinyl alcohol-based copolymer resins obtained using the materials, synthesizing methods, saponification methods, etc., disclosed in Japanese Patent Laid-open No. 2006-176589, may be favorably utilized:

[Chem. 1]

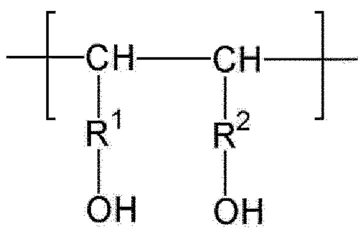

(1)

(In formula (1), $R^1$ and $R^2$ each independently represent a hydrocarbon group with 1 to 3 carbon atoms.)

Preferably component A is a saponified product of a copolymer comprising radical polymerizable monomers including radical polymerizable monomers expressed by formula (2) below and vinyl ester-based monomers. When this component is a saponified product of a copolymer comprising these radical polymerizable monomers, migration can be prevented particularly well:

[Chem. 8]

$$R^3O\text{-}R^1\text{-}CH{=}CH\text{-}R^2\text{-}OR^4 \qquad (2)$$

(In formula (2), $R^1$ and $R^2$ each independently represent a hydrocarbon group with 1 to 3 carbon atoms, $R^3$ and $R^4$ each

independently represent a hydrogen atom or $-COR^5$ group, and $R^5$ represents a hydrocarbon group with 1 to 8 carbon atoms that may also have halogen groups, hydroxyl groups, ester groups, carboxylic acid groups, or sulfonic acid groups.)

The aforementioned radical polymerizable monomers expressed by formula (2) include 1,4-dihydroxy-2-butene, 1,4-diacyloxy-2-butene, 1-hydroxy-4-acyloxy-2-butene, 1,4-diacyloxy-1-methyl-2-butene, 1,5-diacyloxy-2-pentene, 1,6-diacyloxy-2-hexene, 1,6-diacyloxy-3-hexene, etc., of which 1,4-diacyloxy-2-butene whose $R^1$ and $R^2$ are each a methylene group, $R^3$ and $R^4$ are each $-CO-R^5$, and $R^5$ is an alkyl group, is preferred, while 1,4-diacetoxy-2-butene whose $R^5$ is a methyl group is more preferred, in that they offer excellent copolymerization reactivity and ease of handling in industrial settings.

The aforementioned vinyl ester-based monomers include vinyl formate, vinyl acetate, vinyl propionate, vinyl butyrate, vinyl caproate, vinyl caprylate, vinyl caprate, vinyl laurate, vinyl myristate, vinyl palmitate, vinyl stearate, vinyl pivalate, vinyl octylate, vinyl cyclohexanecarboxylate, vinyl adipate, vinyl methacrylate, vinyl crotonate, vinyl sorbate, vinyl benzoate, vinyl cinnamate, vinyl versatate, and other vinyl ester-based monomers, etc., of which vinyl acetate is preferred.

Besides the aforementioned radical polymerizable monomers expressed by formula (2) and vinyl ester-based monomers, other radical polymerizable monomers may also be added, if necessary, to the extent that doing so does not interfere with the effects of the present invention.

The method for obtaining the aforementioned polyvinyl alcohol-based copolymer resin is not specifically limited, and the standard solution polymerization method, bulk polymerization method, emulsion polymerization method, or other known methods may be utilized.

The saponification method is not specifically limited, either, and catalysts used in standard saponification including alkaline catalysts such as sodium hydroxide, potassium hydroxide, sodium methylate, sodium ethylate, potassium methylate, lithium methylate, and other hydroxides of alkaline metals, as well as acid catalysts such as sulfuric acid, hydrochloric acid, nitric acid, etc., may be utilized.

Additionally, the saponification degree, although not specifically limited, is preferably 80% by mol or higher, or more preferably 90% by mol or higher, from the viewpoint of achieving high anti-migration property.

The average polymerization degree (measured according to JIS K 6726) of the aforementioned copolymer resin, although not specifically limited, is preferably 300 to 4000, or more preferably 400 to 2600, or yet more preferably 500 to 2200.

The content of the aforementioned structural units expressed by formula (1) above, although not specifically limited, is preferably 0.1 to 20% by mol, or more preferably 0.5 to 15% by mol, or yet more preferably 1 to 10% by mol.

Preferably the anti-migration coating agent proposed by the present invention is such that aforementioned component A is a polyvinyl alcohol-based copolymer resin expressed by formula (3) below. When this component is such polyvinyl alcohol-based copolymer resin, migration can be prevented particularly well.

It should be noted that, while formula (3) below shows a configuration of a block copolymer comprising three structural units in a simplified manner, the arrangement of three structural units is not specifically limited, and random copolymers are also included. Commercial products of such polyvinyl alcohol-based copolymer resins satisfying formula (3) below include OKS-1009, OKS-1109, OKS-8049 (Nippon Synthetic Chemical Industry Co., Ltd.), etc.

[Chem. 9]

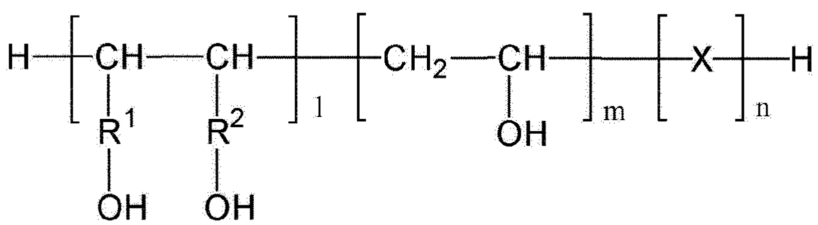

(3)

(In formula (3), $R^1$ and $R^2$ each independently represent a hydrocarbon group with 1 to 3 carbon atoms, and X represents a structural unit which is derived from a molecular structure comprising radical polymerizable monomers including radical polymerizable monomers expressed by formula (2) and vinyl ester-based monomers and which is different from other repeating structural units in formula (3). Also, l, m, and n each represent an average number of structural units per molecule, where the relationships of $l+m+n = 300$ to $4000$, $l/(l+m+n) = 0.001$ to $0.200$, $m/(l+m+n) = 0.700$ to $0.999$, and $n/(l+m+n) = 0$ to $0.100$ are satisfied.)

In formula (3) above, preferably the relationships of $l+m+n = 400$ to $3600$, $l/(l+m+n) = 0.01$ to $0.18$, $m/(l+m+n) = 0.77$ to $0.99$, and $n/(l+m+n) = 0$ to $0.08$ are satisfied, or more preferably the relationships of $l+m+n = 500$ to $3000$, $l/(l+m+n) = 0.05$ to $0.17$, $m/(l+m+n) = 0.78$ to $0.95$, and $n/(l+m+n) = 0$ to $0.05$ are satisfied.

(Polyvinyl Alcohol-based (Co)polymer Resin (Component B)) (which may be hereinafter referred to simply as "component B.")

Preferably the anti-migration coating agent proposed by the present invention is such that aforementioned component B is a vinyl alcohol-based (co)polymer resin satisfying condition 4 and/or condition 5 below. When aforementioned component B is a vinyl alcohol-based (co)polymer resin satisfying condition 4 and/or condition 5 below, the carbonyl groups in the molecule of the resin react with the hydrazine residue, etc., in the crosslinking agents discussed below to form a crosslinked structure, the result of which is that the cohesive force of the coating film can be increased in a favorable manner to add sufficient lamination strength.

It should be noted that the "(co)polymerization" as mentioned below includes both homopolymerization utilizing one type of radical polymerizable monomer and copolymerization utilizing two or more types of radical polymerizable monomers, while the term "(co)polymer resin" includes both a homopolymer resin obtained by homopolymerizing one type of radical polymerizable monomer and a copolymer resin obtained by copolymerizing two or more types of radical polymerizable monomers.

Condition 4: It is a saponified product of a copolymer comprising radical polymerizable monomers including vinyl ester-based monomers and carbonyl group-containing radical polymerizable monomers.

Condition 5: It is an acetoacetylated product of a saponified product of a (co)polymer comprising radical polymerizable monomers including vinyl ester-based monomers.

Also, DF-05, DF-10, DF-17, DF-20 (Japan Vam & Poval Co., Ltd.), etc., may be used as component (B).

The method for introducing carbonyl groups to the molecule of aforementioned component B is not specifically limited; however, (1) a method of copolymerizing a vinyl ester-based monomer and a carbonyl group-containing monomer that has carbonyl groups in the molecule so that the carbonyl groups will not be removed from the molecule of the polyvinyl alcohol-based copolymer as a result of saponification, or (2) a method of polymerizing the polymerization components including a vinyl ester-based monomer, and then producing hydroxyl groups through saponification and further acetylating the hydroxyl groups by means of introducing carbonyl groups through acetoacetylation as mentioned below, may be utilized, for example.

Specifically, for the vinyl ester-based monomer in (1) and (2) above, any of those listed as vinyl ester-based monomers for aforementioned component A may be favorably used. Also, carbonyl group-containing radical polymerizable monomers include, for example, vinyl ketones, diacetone (meth)acrylamide, etc., of which diacetone (meth)acrylamide, etc., may be favorably used.

Here, it should be noted that, in the Specification, a (meth)acrylamide refers to an acrylamide and/or methacrylamide.

The present invention may contain the aforementioned vinyl ester-based monomers, aforementioned carbonyl group-containing monomers, and if necessary, other radical polymerizable monomers to the extent that doing so does not interfere with the effects of the present invention.

The method for obtaining the aforementioned vinyl alcohol-based (co)polymer resin is not specifically limited, and a standard solution polymerization method, bulk polymerization method, emulsion polymerization method, or other known methods may be utilized.

The saponification method is not specifically limited, either, and catalysts used in standard saponification including alkaline catalysts such as sodium hydroxide, potassium hydroxide, sodium methylate, sodium ethylate, potassium methylate, lithium methylate, and other hydroxides of alkaline metals, as well as acid catalysts such as sulfuric acid, hydrochloric acid, nitric acid, etc., may be utilized.

Additionally, the saponification degree, although not specifically limited, is preferably 80% by mol or higher, or more preferably 90% by mol or higher, from the viewpoint of achieving high anti-migration property.

Preferably the anti-migration coating agent proposed by the present invention is such that aforementioned component B is a polyvinyl alcohol-based (co)polymer resin containing, in the molecule, structural units expressed by formula (4) below and/or structural units expressed by formula (5) below. When such polyvinyl alcohol-based (co)polymer resin is used, the carbonyl groups in the molecule of the resin react with a hydrazine residue, etc., in the crosslinking agents discussed below to form a crosslinked structure in a more favorable manner, the result of which is that the cohesive force of the coating film can be increased in a more favorable manner to add sufficient lamination strength in a more favorable manner.

[Chem. 10]

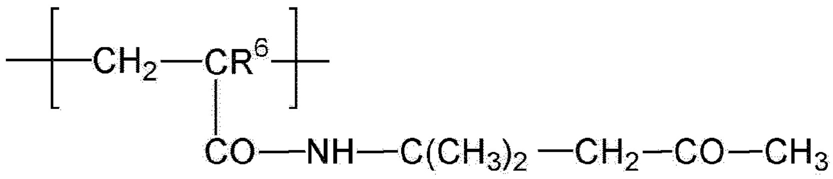

(4)

[Chem. 11]

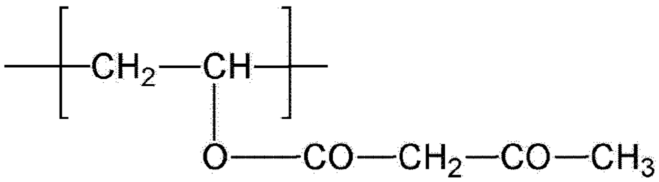

(5)

(In formula (4), $R^6$ represents hydrogen or a methyl group.)

A polyvinyl alcohol-based (co)polymer resin containing structural units expressed by formula (4) above may be obtained in a favorable manner by, for example, utilizing diacetone (meth)acrylamide as a copolymerization component.

A polyvinyl alcohol-based (co)polymer resin containing structural units expressed by formula (5) above may be obtained in a favorable manner by, for example, a method of synthesizing a polyvinyl alcohol-based (co)polymer resin first, and then introducing carbonyl groups through acetoacetylation of the hydroxyl groups in the molecule.

To be specific, it may be manufactured by causing a diketene to react with a synthesized polyvinyl alcohol-based (co)polymer resin using, for example, a method of causing a gaseous or liquid diketene to react with the resin directly, a method of causing an acetic acid or other organic acid to be adsorbed to/occluded in the resin first and then causing a gaseous or liquid diketene to react with it in an inert gas atmosphere, or a method of spraying a mixture consisting of an organic acid and a diketene to, and thereby causing it to react with, the resin (reaction and production step), followed by washing and removing of any unreacted diketene using an alcohol with 1 to 3 carbon atoms (washing step), and by drying under prescribed conditions (drying step).

The average polymerization degree (measured according to JIS K 6726) of the aforementioned polyvinyl alcohol-based (co)polymer resin, although not specifically limited, is preferably 300 to 4000, or more preferably 400 to 2600, or yet more preferably 500 to 2200.

Also, the content of the structural units expressed by formula (4) and/or formula (5), although not specifically limited, is preferably 0.1 to 25% by mol, or more preferably 0.5 to 20% by mol, or yet more preferably 1 to 15% by mol, as a total of both structural units.

It is particularly preferable that the anti-migration coating agent proposed by the present invention is such that aforementioned component B is a polyvinyl alcohol-based (co)polymer resin expressed by formula (6) below. When such polyvinyl alcohol-based (co)polymer resin is used, the carbonyl groups in the molecule of the resin react with the hydrazine residue, etc., in the crosslinking agents discussed below to form a crosslinked structure in an extremely favorable manner, the result of which is that the cohesive force of the coating film can be increased in an extremely favorable manner to add sufficient lamination strength in an extremely favorable manner.

A polyvinyl alcohol-based (co)polymer resin expressed by formula (6) below may be obtained using the copolymerization components and manufacturing method described above.

[Chem. 12]

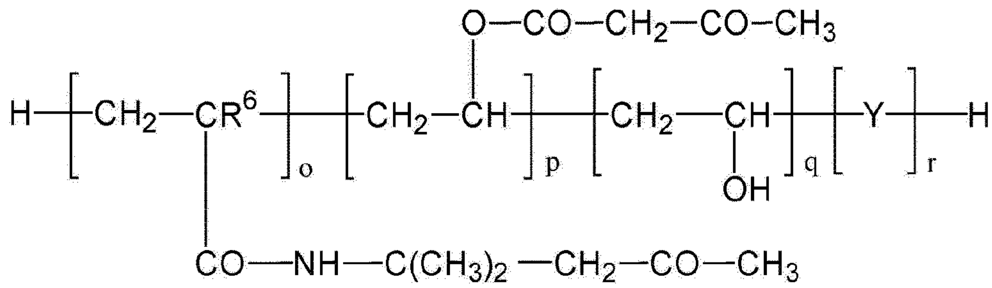

(6)

(In formula (6), $R^6$ represents hydrogen or a methyl group. Also, Y represents a structural unit which is derived

from a molecular structure of any of the aforementioned radical polymerizable monomers including vinyl ester-based monomers and/or carbonyl group-containing radical polymerizable monomers and which is different from other repeating structural units in formula (6). Also, o, p, q, and r each represent an average number of structural units per molecule, where the relationships of o+p+q+r = 300 to 4000, (o+p)/(o+p+q+r) = 0.001 to 0.250, q/(o+p+q+r) = 0.550 to 0.999, and r/(o+p+q+r) = 0 to 0.200 are satisfied.)

In formula (6) above, preferably the relationships of o+p+q+r = 400 to 3600, (o+p)/(o+p+q+r) = 0.01 to 0.20, q/(o+p+q+r) = 0.65 to 0.99, and r/(o+p+q+r) = 0 to 0.15 are satisfied, or more preferably the relationships of o+p+q+r = 500 to 3000, (o+p)/(o+p+q+r) = 0.05 to 0.15, q/(o+p+q+r) = 0.75 to 0.95, and r/(o+p+q+r) = 0 to 0.10 are satisfied.

(Condition 1) (Using Both Component A and Component B)

When the mass of component A, and the mass of component B, contained in the anti-migration coating agent, are given by WA and WB, respectively, WA/WB is preferably 80/20 to 20/80, or more preferably 70/30 to 30/70, or WA/WB is yet more preferably 60/40 to 40/60.

If the content ratio of WA increases beyond the range of WA/WB = 80/20 to 20/80, the cohesive force of a coating film obtained by coating the anti-migration coating agent on a base material, as well as the film's adhesive property to the base material, may drop. Also, it may not be possible to obtain sufficient adhesive property to a printing layer formed thereon or sufficient lamination strength when it is used in a composite laminate film.

If, on the other hand, the content ratio of WA drops below the range of WA/WB = 80/20 to 20/80, good anti-migration property may not be obtained with a thin film.

It should be noted that, also when crosslinking agents are used, trends similar to those mentioned will manifest depending on whether the content ratio of the polyvinyl alcohol-based (co)polymer resin (aforementioned component B) crosslinked by the crosslinking agents and containing carbonyl groups in the molecule is higher or lower.

(Other Polyvinyl Alcohol-based Polymers)

Other polyvinyl alcohol-based polymers may be contained to the extent that the effects of the present invention are not inhibited.

As other polyvinyl alcohol-based polymers, sulfonic acid group-modified polyvinyl alcohols may be adopted. Such sulfonic acid group-modified polyvinyl alcohols, in terms of how they are obtained, include, for example, those obtained by copolymerizing any of the aforementioned vinyl ester-based monomers and any of the sulfonic acid group-containing monomers as mentioned below and then saponifying the copolymer, as well as those containing sulfonic acid groups or sulfonate groups obtained by copolymerizing any of the aforementioned vinyl ester-based monomers and any of the sulfonate-containing monomers as mentioned below and then converting the sulfonate to sulfonic acid groups by the aforementioned saponification method or ion exchange, for example.

It should be noted that the saponification degree, at the time of the aforementioned saponification, is preferably 80.0% or higher, or more preferably 85.0% or higher.

The aforementioned sulfonic acid group-containing monomers include vinyl sulfonic acid, acrylamide tertiary butyl sulfonic acid, orthostyrene sulfonic acid, methastyrene sulfonic acid, parastyrene sulfonic acid, etc.

The aforementioned sulfonate-containing monomers include salts of the aforementioned sulfonic acid group-containing monomers, etc.

The aforementioned sulfonic acid group-containing polymers include, for example, those obtained by desalinating, through an ion-exchange treatment, etc., CKS-50, L-3266 (manufactured by Nippon Synthetic Chemical Industry Co., Ltd.), SK-5102 (manufactured by Kuraray Co., Ltd.), A-12SL (manufactured by Toagosei Co., Ltd.) and other commercially available sulfonate-containing polymers.

(Inorganic layered materials)

The inorganic layered materials that may be contained under the present invention have cationic metallic atoms and inorganic atomic groups between layers, along with a property to cleave in any of the solvents mentioned below, or any solvent used in a separate swelling/cleaving process, as a result of ionization, and elution into the solvent, of these metallic atoms and inorganic atomic groups.

As for the inorganic layered materials, those constituted by, for example, a structure comprising a number of stacked thin-film layers each having a thickness of approx. 0.5 to 3.0 nm and a width of approx. 100 nm to several μm, wherein the layers possess high anti-migration capability even in a single-layer state, may be favorably used.

This means that, even when the content of the inorganic layered materials in the anti-migration coating agent remains the same, the formed coating film will demonstrate higher anti-gas-migration property in a system that presents a higher degree of cleavage. Additionally, when the coating film receives stretching or peeling stress, a drop in fracture

strength attributable to delamination in uncleaved areas of the inorganic layered materials can be inhibited in a system that presents a higher degree of cleavage.

As described above, the aforementioned inorganic layered materials may be utilized in an extremely favorable manner as materials that achieve the effects of the present invention, in that they can be easily cleaved into near single layers by ionizing the cationic metallic atoms, etc., between layers using water, etc., and thereby causing them to elute into a solvent.

The aforementioned inorganic layered materials are preferably swellable clay minerals that are specifically classified into a two-layer structure type having a tetrahedral layer of silica and an octahedral layer provided thereon whose central metal is aluminum, magnesium, etc., and a three-layer structure type having an octahedral layer whose central metal is aluminum, magnesium, etc., which is sandwiched by tetrahedral layers of silica from both sides. The former includes the kaolinite family, antigorite family belonging to the serpentine group, and the like, while the latter includes the smectite family, vermiculite family, mica family, etc., depending on the number of interlayer cations.

The aforementioned inorganic layered materials specifically include kaolinite, nacrite, dickite, halloysite, hydrated halloysite, antigorite, chrysotile, pyrophyllite, montmorillonite, beidellite, saponite, hectorite, sauconite, stevensite, tetrasilylic mica, sodium taeniolite, muscovite, margarite, talc, vermiculite, phlogopite, xanthophyllite, chlorite, etc., which may be either natural substances or synthesized products. Scaly silica, etc., may also be used. Any of these may be used alone, or two or more types may be combined.

Of these, montmorillonite is preferred in that the present invention, when used as a coating agent, will offer excellent anti-gas-migration property and coating suitability.

(Condition 3) (Using Both Component A and Component B)

When the inorganic layered materials are contained in the anti-migration coating agent, and when the mass of the inorganic layered materials is given by WD, (WA+WB)/WD is preferably 95/5 to 70/30, or more preferably 90/10 to 72/28.

If the content ratio of (WA+WB) increases beyond the range of (WA+WB)/WD = 95/5 to 70/30, good anti-migration property may not be obtained with a thin film. If, on the other hand, the content of (WA+WB) drops below the range of (WA+WB)/WD = 95/5 to 70/30, the cohesive force of a coating film obtained by coating the anti-migration coating agent may drop, in which case the film’s adhesive property to the base material may drop and sufficient lamination strength may not be obtained when the coating film is used in a composite laminate film.

(Condition A) (Using Component A or Component B)

When the anti-migration coating agent contains either one of component A and component B as well as the inorganic layered materials, and when the mass of component A or component B, and the mass of these inorganic layered materials, are given by WAB and WD, respectively, WAB/WD is preferably 90/10 to 62/38, or more preferably 90/10 to 72/28.

If the content ratio of WAB increases beyond the range of WAB/WD = 90/10 to 62/38, good anti-migration property may not be obtained with a thin film. If, on the other hand, the content ratio of WAB drops below the range of WAB/WD = 90/10 to 62/38, the cohesive force of a coating film obtained by coating the anti-migration coating agent may drop, in which case the film’s adhesive property to the base material may drop and sufficient lamination strength may not be obtained when the coating film is used in a composite laminate film.

(Organic Phosphorus Compounds)

The anti-migration coating agent proposed by the present invention may contain organic phosphorus compounds.

Such organic phosphorus compounds include: 1) disodium 5’-inosinate, disodium 5’-guanylate, adenylic acid, thymidic acid, guanylic acid, deoxycytidylic acid, apurinic acid, DNA, RNA, and other base-containing phosphoric acid compounds; 2) sodium polyoxyethylene lauryl ether phosphate, polyoxyethylene oleyl ether phosphoric acid, dicetyl phosphoric acid, triphenyl phosphate, tributyl phosphate, and other organic phosphoric acid compounds; 3) etidronic acid, isopropyl phosphonic acid, diethyl phosphonate, triphenyl phosphonate, triisopropyl phosphonate, and other organic phosphonic acid compounds; 4) egg-yolk lecithin, soybean lecithin, phosphatidylinositol, phosphatidylcholine, phosphatidylserine, and various other phospholipids; and 5) fosfomycin, cyanocobalamin, cyclophosphamide, triclofos sodium, fosfestrol, and other phosphorus-containing drugs.

(Solvents)

The anti-migration coating agent proposed by the present invention may use, as solvents, either aqueous or nonaqueous solvents so long as they can dissolve each of the aforementioned modified polyvinyl alcohol resins, organic phosphorus compounds, and other compounds to be dissolved.
In particular, preferably mixed solvents consisting of water and lower alcohols are used.
To be specific, use of a mixed solvent containing water as well as 15 to 70% by mass of at least one type selected from ethyl alcohol, n-propyl alcohol, iso-propyl alcohol, n-butyl alcohol, iso-butyl alcohol, sec-butyl alcohol, tert-butyl alcohol, and other lower alcohols with 2 to 4 carbon atoms, ethylene glycol, propylene glycol, and other polyalcohols and derivatives thereof, ethyl acetate, methyl ethyl ketone, etc., ensures good solubility of each of the aforementioned modified polyvinyl alcohol resins, which is also favorable in maintaining an appropriate level of solids content.
If the content of the lower alcohols with 2 to 4 carbon atoms in the aforementioned mixed solvent deviates from the aforementioned range, coatability of the anti-migration coating agent may drop.
It should be noted that, if nonaqueous solvents are used, a separate dispersion treatment may be applied to ionize and elute in water the cationic metallic atoms, etc., between the layers of the aforementioned inorganic layered materials and cause them to swell/cleave, followed by replacement of water with other organic solvent, to achieve a completely nonaqueous solvent system for the anti-migration coating agent.
Being a completely nonaqueous solvent system as described above, the anti-migration coating agent can now utilize organic solvents having low solubility in water, which is favorable in that, for example, drying property and base material wettability of the aforementioned anti-migration coating agent can be adjusted over wider ranges and the types of additives and applicable base materials can be increased.
In the aforementioned nonaqueous solvent system, propyl acetate, butyl acetate, and other acetic acid ester-based solvents having slower drying property may be used favorably in addition to the organic solvents mentioned above.

(Crosslinking Agents)

The anti-migration coating agent proposed by the present invention may or may not contain crosslinking agents.
If crosslinking agents are to be contained, polyfunctional hydrazide compounds may be adopted, for example, and by adopting such crosslinking agents, layers offering superior adhesion that are constituted by the anti-migration coating agent can be formed.
The aforementioned polyfunctional hydrazide compounds include, for example, dihydrazide adipate, dihydrazide sebacate, dodecanediohydrazide, dihydrazide citrate, dihydrazide isophthalate, dihydrazide terephthalate, dihydrazide oxalate, dihydrazide succinate, carbohydrazide, thiocarbohydrazide, hydrazino group-modified polyacrylamide, etc.
Of these, dihydrazide adipate, dihydrazide citrate, dihydrazide terephthalate, carbohydrazide, and hydrazino group-modified polyacrylamide are preferred from the viewpoint of laminatability.
Any of these may be used alone, or two or more types may be combined.

(Condition 2) (Using Both Component A and Component B)

When the mass of the crosslinking agents contained in the anti-migration coating agent is given by WC, preferably WB/WC is 95/5 to 60/40, or more preferably WB/WC is 85/15 to 75/25. (Note that the definition of WB is as stated above.)
If the content ratio of WB increases beyond the range of WB/WC = 95/5 to 60/40, the cohesive force of a coating film obtained by coating the anti-migration coating agent on a base material, as well as the film's adhesive property to the base material, may drop. Also, sufficient lamination strength may not be obtained when the film is used in a composite laminate film.
If, on the other hand, the content ratio of WB drops below the range of WB/WC = 95/5 to 60/40, it means the content ratio of the aforementioned crosslinking agents is excessive and, accordingly, good anti-migration property may not be obtained with a thin film.
It should be noted that, in the WB/WC range of 85/15 to 75/25, not only the aforementioned crosslinking agents become crosslinked with aforementioned component B, but also, when the base material has carbonyl groups at its surface, for example, more components may be crosslinked with these carbonyl groups, thereby allowing adhesive property, etc., to be added in a favorable manner.
Additionally, with the anti-migration coating agent proposed by the present invention, preferably the content of the aforementioned crosslinking agents is 0.1 to 10.0% by mass in 100% by mass of the anti-migration coating agent.
If the content of the aforementioned crosslinking agents is under 0.1% by mass, lamination strength may drop, while a content exceeding 10% by mass may lead to lower boilability.

More preferably the content of the aforementioned crosslinking agents is 0.2 to 8.0% by mass in 100% by mass of the anti-migration coating agent.

If necessary, one type, or two or more types, selected from UV absorbents, anti-static agents, leveling agents, defoaming agents, wax/silica or other anti-blocking agents, metal soaps, amides or other releasing agents, etc., may be added further to the aforementioned anti-migration coating agent as other components.

(Method for Manufacturing Anti-migration Coating Agent)

The anti-migration coating agent proposed by the present invention may be obtained by mixing, as necessary, inorganic layered materials, etc., into a mixed solution consisting of aforementioned component A and component B and causing them to swell or cleave, or by mixing component A and component B, in a solution state if necessary, into a solvent in which inorganic layered materials have been swelled or cleaved beforehand, or, in some cases, into an inorganic layered compound-dispersed liquid containing other materials.

Also, it may be obtained through a step to prepare a mixture in which a modified polyvinyl alcohol resin and an alkoxysilane have been mixed, and a step to hydrolyze the aforementioned alkoxysilane in the aforementioned mixture. In this case, for example, a solvent and a sulfonic acid group-containing polyvinyl alcohol or other modified polyvinyl alcohol resin are added to a tetraalkoxysilane, followed by agitation under heating, to obtain a solution of a hydrolysate of tetraalkoxysilane.

Then, the aforementioned solution of a hydrolysate of tetraalkoxysilane is added to a separately prepared solution comprising a carbonyl group-modified polyvinyl alcohol dissolved in a solvent, and an agitation device or dispersion device is utilized to mix the respective components, or other methods may be adopted.

The aforementioned mixing means or agitation device or dispersion device is not specifically limited so long as it is a standard agitation device or dispersion device, because any such device can mix the respective components in the dispersion liquid, where the Three-One Motor (manufactured by Shinto Scientific Co., Ltd.), etc., may be used, for example.

It should be noted that a high-pressure dispersion machine may be used to obtain a particularly transparent and stable inorganic layered compound-dispersed liquid.

And, high-pressure dispersion machines that may be utilized for this purpose include, for example, the Gaulin (manufactured by APV Gaulin, Inc.), Nanomizer (manufactured by Nanomizer Inc.), Microfluidizer (manufactured by Microfluidics International Corporation), Ultimizer (manufactured by Sugino Machine Limited), DeBee (manufactured by Bee International, Inc.), etc., where preferably the dispersion treatment is applied with these high-pressure dispersion machines operating under a pressure condition of 100 MPa or lower. If the pressure condition exceeds 100 MPa, the inorganic layered compounds break up more easily, potentially lowering the intended anti-migration property.

It should be noted that, as a method to further promote the swelling/cleavage of the aforementioned inorganic layered compounds, a peroxide treatment, ion-exchange treatment, etc., of the aforementioned inorganic layered compounds may be utilized.

For the aforementioned peroxide treatment, a method of adding and mixing a peroxide to/with the aforementioned inorganic layered compounds by a quantity that gives a ratio by mass of peroxide/inorganic layered compounds in a range of preferably 2/1 to 1/1000, or more preferably 1/1 to 5/1000, and then, after the aforementioned adding/mixing process, using the aforementioned dispersion device to cleave the aforementioned inorganic layered compounds, may be favorably used. Such method is a preferred dispersion treatment method when the aforementioned inorganic layered compounds are naturally produced materials.

The aforementioned ion-exchange treatment is a dispersion treatment method wherein ions eluting with cleavage of the aforementioned inorganic layered compounds are removed to lower the ion concentration of the system, thereby further promoting cleavage and causing the aforementioned inorganic layered compounds to be evenly distributed in the aforementioned solvent.

As for the method for removing ions as mentioned above, ion-exchange resins, ion-exchange membranes, ion-exchange celluloses, etc., having ion-exchange capacity or ion-adsorption capacity, and zeolite, acid clay, peat, lignite, and other natural substances, as well as synthetic zeolite, permutite, zirconium tungstate, and other synesthetic substances, may be utilized, and while other methods are also available including washing with water, etc., methods of removing ions using ion-exchange resins, ion-exchange membranes, ion-exchange celluloses, etc., are preferred.

Also, if the anti-migration coating agent proposed by the present invention does not contain any hydrolysate of alkoxysilane, it may be obtained simply by mixing, in any desired order, the respective components to be contained in the anti-migration coating agent.

(Laminate Constituted by Providing, on Base Material, Layer Formed by Anti-migration Coating Agent)

The laminate constituted by providing, on a base material, a layer formed by the anti-migration coating agent

proposed by the present invention, has at least a base material, a layer formed by the anti-migration coating agent, and an ink layer, in this order. It should be noted that other layers may be formed between these layers.

Also, preferably the thickness of the layer formed by the anti-migration coating agent and then dried, is 0.1 to 5.0 μm. If the thickness of the layer is under 0.1 μm, the intended anti-migration property may not be obtained, while a thickness exceeding 5.0 μm may not improve anti-migration property despite a further increase in thickness, and can even make it difficult to achieve sufficient transparency.

Base materials on which to form a layer from the anti-migration coating agent proposed by the present invention include, for example, cardboards, papers such as coated paper and uncoated paper, various types of resin films constituted by polyolefin, modified polyolefin, polycarbonate, ABS, polyvinyl chloride, polyethylene terephthalate, or other polyester-, nylon-, polystyrene- or acrylic-based resins, etc., plates, metal foils, glass, wood, and fabrics, which are traditionally used for packaging as soft packaging materials. They also include composite films or other materials constituted by two or more types of the foregoing. Also, preferably these base materials have been given a metal vapor deposition treatment or corona discharge treatment, or coated with a primer or varnish, or otherwise surface-coated either partially or over the entire surface.

For example, when a layer by the anti-migration coating agent is formed on a cardboard, a cardboard primer, etc., may be applied beforehand, or a varnish may be applied on the cardboard or wood beforehand.

The base material can have any desired shape, and a flat shape such as film, sheet, or plate, or other shape such as box, capsule, or bag, may be selected, for example, and also regarding the base material's surface, any desired type may be selected from smooth surfaces, irregular surfaces, curved surfaces, etc.

Applications are not limited, either, so long as they are applications in which the aforementioned base material finds its use, such as containers, constitutional members of units, decorative members, articles of daily use, and the like.

The layer by the anti-migration coating agent may be formed using any of various known coating means and drying means. When an anti-migration coating agent containing the aforementioned components is used, a base material that possesses good anti-migration property even after undergoing a hot-water treatment can be obtained.

<Active Energy Ray-curable Ink Composition>

Under the present invention, an active energy ray-curable ink composition as described below that will cure under active energy rays is printed on an undercoat coating film obtained by applying the aforementioned anti-migration coating agent.

The active energy rays, in the context of the present invention, are what cause the active energy ray-curable ink composition to polymerize, such as those having wavelengths of 10 nm to 100 μm. Among such active energy rays, one or more types selected from the group that consists of, for example, ultraviolet rays (vacuum ultraviolet ray, far-ultraviolet ray, near-ultraviolet ray), visible lights, infrared rays (near-infrared ray, mid-infrared ray, far-infrared ray), electron beams, laser beams, etc., may be used.

As for the radiation sources (light sources) of active energy rays, one or more types selected from the group that consists of, for example, ultrahigh-pressure mercury lamps, high-pressure mercury lamps, low-pressure mercury lamps, mercury xenon lamps, metal halide lamps, high-power metal halide lamps, xenon lamps, pulsed xenon lamps, deuterium lamps, fluorescent lamps, Nd-YAG third-harmonic wave lasers, He-Cd lasers, nitrogen lasers, Xe-Cl excimer lasers, Xe-Fe excimer lasers, semiconductor-pumped solid state lasers, LED lamps, etc., may be used. Preferably, in consideration of the environment, light-emitting diodes (LEDs) that emit ultraviolet rays of 350 to 420 nm in emission peak wavelength are used.

(Compounds Having One Ethylenic Unsaturated Bond)

In the active energy ray-curable ink composition proposed by the present invention, any known compounds having one ethylenic unsaturated bond may be used without limitation. Among such compounds, one or more types selected from the group that consists of the compounds, etc., listed below, for example, may be used.

- Unsaturated Carboxylic Acid-based Compounds -

Among the unsaturated carboxylic acid-based compounds, one or more types selected from the group that consists of, for example, (meth)acrylic acid, itaconic acid, crotonic acid, isocrotonic acid, fumaric acid, maleic acid, and other unsaturated carboxylic acids, as well as salts thereof and acid anhydrides thereof, may be used.

- Alkyl (Meth)acrylate-based Compounds -

Among the alkyl (meth)acrylates, one or more types selected from the group that consists of, for example,

methyl (meth)acrylate, ethyl (meth)acrylate, isopropyl (meth)acrylate, n-butyl (meth)acrylate, i-butyl (meth)acrylate, t-butyl acrylate, amyl (meth)acrylate, isoamyl (meth)acrylate, hexyl (meth)acrylate, 2-ethylhexyl (meth)acrylate, octyl (meth)acrylate, decyl (meth)acrylate, dodecyl (meth)acrylate, isooctyl (meth)acrylate, lauryl (meth)acrylate, stearyl (meth)acrylate, isostearyl (meth)acrylate, isodecyl (meth)acrylate, octadecyl (meth)acrylate, dicyclopentanyl (meth)acrylate, nonyl (meth)acrylate, myristyl (meth)acrylate, isobornyl (meth)acrylate, cyclohexyl (meth)acrylate, norbornyl (meth)acylate, dicyclopentanyl (meth)acrylate, 1-adamantyl (meth)acrylate, 3,3,5-trimethylcyclohexyl acrylate, 4-t-butylcyclohexyl (meth)acrylate, etc., which are (meth)acrylate-based compounds having straight-chain, branched-chain, or cyclic alkyl groups with 1 to 30 carbon atoms, may be used.

- Hydroxy Group-containing (Meth)acrylate-based Compounds -

Among the hydroxyl group-containing (meth)acrylate-based compounds, one or more types selected from the group that consists of, for example, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-methoxypropyl (meth)acrylate, 2-hydroxy-3-butoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, 1,6-hexanediol mono(meth)acrylate, glycerin mono(meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, (meth)acrylic acid-2-hydroxy-3-allyloxypropyl, 2-(meth)acryloyloxyethyl-2-hydroxypropyl phthalate, 2-ethylhexyl EO-modified (meth)acrylate, o-phenylphenol EO-modified acrylate, p-cumylphenol EO-modified (meth)acrylate, nonylphenol EO-modified (meth)acrylate, and other (poly)alkylene glycol-modified (meth)acrylates, etc., may be used.

- Halogen-containing (Meth)acrylate-based Compounds -

Among the halogen-containing (meth)acrylate-based compounds, one or more types selected from the group that consists of, for example, trifluoromethyl (meth)acrylate, 2,2,2-trifluoroethyl (meth)acrylate, 2,2,3,3-tetrafluoropropyl (meth)acrylate, 1H-hexafluoroisopropyl (meth)acrylate, 1H,1H,5H-octafluoropentyl (meth)acrylate, 1H,1H,2H,2H-heptadecafluorodecyl (meth)acrylate, 2,6-dibromo-4-butylphenyl (meth)acrylate, 2,4,6-tribromophenoxyethyl (meth)acrylate, 2,4,6-tribromophenol 3EO (ethylene oxide) adduct (meth)acrylate, etc., may be used.

- Ether Group-containing (Meth)acrylate-based Compounds -

Among the ether group-containing (meth)acrylate-based compounds, one or more types selected from the group that consists of, for example, 1,3-butylene glycol methyl ether (meth)acrylate, methoxy triethylene glycol (meth)acrylate, methoxy dipropylene glycol (meth)acrylate, methoxy tripropylene glycol (meth)acrylate, methoxy polypropylene glycol (meth)acrylate, ethoxy diethylene glycol (meth)acrylate, ethyl carbitol (meth)acrylate, 2-ethylhexyl carbitol (meth)acrylate, tetrahydrofurfuryl (meth)acrylate, cresyl polyethylene glycol (meth)acrylate, (meth)acrylic acid-2-(vinyloxyethoxy)ethyl, phenoxyethyl (meth)acrylate, p-nonylphenoxyethyl (meth)acrylate, p-nonylphenoxypolyethylene glycol (meth)acrylate, glycidyl (meth)acrylate, phenoxydiethylene glycol (meth)acrylate, phenoxy-polyethylene glycol (meth)acrylate, hexaethylene glycol monophenyl ether mono(meth)acrylate, diethylene glycol monobutyl ether acrylate, dipropylene glycol monomethyl ether (meth)acrylate, 3-methoxybutyl (meth)acrylate, methoxydiethylene glycol (meth)acrylate, methoxypropylene glycol (meth)acrylate, methoxypolyethylene glycol (meth)acrylate (number of EO repeating units: 400, 700, etc.), 2-(2-ethoxyethoxy)ethyl (meth)acrylate, 2-ethoxyethyl (meth)acrylate, 2-methoxyethyl (meth)acrylate, ethoxyethyl acrylate, ethoxyethoxyethyl (meth)acrylate, butoxyethyl (meth)acrylate, alkoxylated 2-phenoxyethyl (meth)acrylate (ethoxylated 2-phenoxyethyl (meth)acrylate, propoxylated 2-phenoxyethyl (meth)acrylate, etc.), alkoxylated nonylphenyl (meth)acrylate (ethoxylated (4) nonylphenol acrylate, etc.), 2-phenoxyethyl (meth)acrylate, paracumylphenoxyethylene glycol (meth)acrylate, methylphenoxyethyl acrylate, ethoxylated succinic acid (meth)acrylate, ethoxylated tribromophenyl acrylate, ethoxylated nonylphenyl (meth)acrylate, and other alkoxy- and/or phenoxy-based (meth)acrylates, etc., may be used.

- Carboxyl Group-containing (Meth)acrylate-based Compounds -

Among the carboxyl group-containing (meth)acrylate-based compounds, one or more types selected from the group that consists of, for example, β-carboxyethyl (meth)acrylate, succinic acid monoacryloyloxyethyl ester, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, 2-(meth)acryloyloxypropyl tetrahydrohydrogen phthalate, etc., may be used.

- Vinyl Ether Group-containing (Meth)acrylate-based Compounds -

Among the vinyl ether group-containing (meth)acrylate-based compounds, one or more types selected from the group that consists of, for example, (meth)acrylic acid-2-vinyloxyethyl, (meth)acrylic acid-3-vinyloxypropyl, (meth)acrylic acid-1-methyl-2-vinyloxyethyl, (meth)acrylic acid-2-vinyloxypropyl, (meth)acrylic acid-4-vinyloxybutyl, (meth)acrylic acid-1-methyl-3-vinyloxypropyl, (meth)acrylic acid-1-vinyloxymethylpropyl, (meth)acrylic acid-2-methyl-3-vinyloxypropyl, (meth)acrylic acid-3-methyl-3-vinyloxypropyl, (meth)acrylic acid-1,1-dimethyl-2-vinyloxyethyl, (meth)acrylic acid-3-vinyloxybutyl, (meth)acrylic acid-1-methyl-2-vinyloxypropyl, (meth)acrylic acid-2-vinyloxybutyl, (meth)acrylic acid-4-vinyloxycyclohexyl, (meth)acrylic acid-5-vinyloxypentyl, (meth)acrylic acid-6-vinyloxyhexyl, (meth)acrylic acid-4-vinyloxymethylcyclohexylmethyl, (meth)acrylic acid-3-vinyloxymethylcyclohexylmethyl, (meth)acrylic acid-2-vinyloxymethylcyclohexylmethyl, (meth)acrylic acid-p-vinyloxymethylphenylmethyl, (meth)acrylic acid-m-vinyloxymethylphenylmethyl, (meth)acrylic acid-o-vinyloxymethylphenylmethyl, (meth)acrylic acid-2-(vinyloxyisopropoxy)ethyl, (meth)acrylic acid-2-(vinyloxyethoxy)propyl, (meth)acrylic acid-2-(vinyloxyethoxy)isopropyl, (meth)acrylic acid-2-(vinyloxyisopropoxy)propyl, (meth)acrylic acid-2-(vinyloxyisopropoxy)isopropyl, (meth)acrylic acid-2-(vinyloxyethoxyethoxy)ethyl, (meth)acrylic acid-2-(vinyloxyethoxyisopropoxy)ethyl, (meth)acrylic acid-2-(vinyloxyisopropoxyethoxy)ethyl, (meth)acrylic acid-2-(vinyloxyisopropoxyisopropoxy)ethyl, etc., may be used.

- Unsaturated Carboxylic Acid Amide-based Compounds -

Among the unsaturated carboxylic acid amide-based compounds, one or more types selected from the group that consists of, for example, (meth)acrylamide, N-methylol(meth)acrylamide, diacetone (meth)acrylamide, N,N-dimethyl(meth)acrylamide, N,N-diethyl(meth)acrylamide, N-isopropyl(meth)acrylamide, (meth)acryloylmorpholine, N,N-dimethylaminopropyl(meth)acrylamide, N,N-diethylaminopropyl(meth)acrylamide, etc., may be used.

- Other (Meth)acylate-based Compounds -

Among the other (meth)acrylate-based compounds, one or more types selected from the group that consists of, for example, benzyl (meth)acrylate, N,N-dimethylaminoethyl (meth)acrylate, N,N-dimethylaminopropyl (meth)acrylate, morpholinoethyl (meth)acrylate, trimethylsiloxyethyl (meth)acrylate, diphenyl-2-(meth)acryloyloxyethyl phosphate, 2-(meth)acryloyloxyethyl acid phosphate, caprolactone-modified-2-(meth)acryloyloxyethyl acid phosphate, 2-hydroxy-1-(meth)acryloxy-3-methacryloxypropane, acryloxoethyl phthalate, 2-(meth)acryloyloxyethyl-2-hydroxyethyl phthalate, 2-(meth)acryloyloxypropyl phthalate, tricyclodecanemonomethylol (meth)acrylate, (meth)acrylic acid dimer, diethylaminoethyl (meth)acrylate, 2-(meth)acryloyloxyethyl succinic acid, 2-(meth)acryloyloxyethyl hexahydrophthalic acid, 2-ethylhexyl-diglycol (meth)acrylate, aminoethyl (meth)acrylate, ethyl carbitol (meth)acrylate, ethyl diglycol acrylate, quaternary salt of dimethylaminoethyl acrylate benzyl chloride, tribromophenyl (meth)acrylate, 1,4-cyclohexanedimethanol mono(meth)acrylate, cresol (meth)acrylate, trimethylolpropane formal (meth)acrylate, neopentyl glycol (meth)acrylic acid-benzoic acid ester, (2-methyl-2-ethyl-1,3-dioxolane-4-yl)methyl (meth)acrylate, 1-(meth)acryloylpiperidine-2-one, 2-(meth)acrylic acid-1,4-dioxaspiro[4,5]deci-2-ylmethyl, N-(meth)acryloyloxyethyl hexahydrophthalimide, γ-butylolactone (meth)acrylate, caprolactone-modified tetrahydrofurfuryl acrylate, imide acrylate, (meth)acrylic acid vinyl, maleimide, dicyclopentenyloxyethyl (meth)acrylate, etc., may be used.

- N-vinyl-based Compounds -

Among the N-vinyl-based compounds, one or more types selected from the group that consists of, for example, N-vinylpyrrolidone, N-vinylformamide, N-vinylacetamide, N-vinyl-2-caprolactam, N-vinylcarbazole, etc., may be used.

- Allylate-based Compounds -

Among the allylate-based compounds, one or more types selected from the group that consists of, for example, allyl glycidyl ether, diallyl phthalate, triallyl trimellitate, isocyanuric acid triallylate, etc., may be used.

- Other Compounds Having One Ethylenic Unsaturated Bond -

Among the "other compounds having one ethylenic unsaturated bond" besides the aforementioned compounds having one ethylenic unsaturated bond, one or more types selected from the group that consists of, for example, vinyl acetate, vinyl monochloroacetate, vinyl benzoate, vinyl pivalate, vinyl butylate, vinyl laurate, vinyl adipate, vinyl crotonate, vinyl 2-ethylhexanoate, styrene, vinyl toluene, p-hydroxystyrene, p-chlorostyrene, p-bromostyrene, p-methylstyrene, p-methoxystyrene, p-t-butoxystyrene, p-t-butoxycarbonylstyrene, p-t-butoxycarbonyloxystyrene, 2,4-diphenyl-4-methyl-1-pentene, three-membered ring compounds (such as vinylcyclopropanes, 1-phenyl-2-vinylcyclopropanes, 2-phenyl-3-vinyloxylanes, 2,3-divinyloxylanes, etc.), cyclic ketene acetals (such as 2-methylene-1,3-dioxepane, podioxolanes, 2-methylene-4-phenyl-1,3-dioxepane, 4,7-dimethyl-2-methylene-1,3-dioxepane, 5,6-benzo-2-methylene-1,3-diosepane, etc.), for example, may be used.

(Compounds Having Two Ethylenic Unsaturated Bonds)

Any known compounds having two ethylenic unsaturated bonds may be used without limitation. For example, one or more types selected from the group that consists of (mono, di, tri, tetra, or poly)ethylene glycol di(meth)acrylate, polyethylene glycol (100, 400 or 700) di(meth)acrylate, (mono, di, tri, tetra or poly)propylene glycol di(meth)acrylate, cyclohexanedimethanol di(meth)acrylate, dicyclopentanyl di(meth)acrylate, dimethyloloctane di(meth)acrylate, dimethylol-tricyclodecane di(meth)acrylate, dimethylolpropane di(meth)acrylate, tricyclodecanedimethylol di(meth)acrylate, tris(2-hydroxyethyl)isocyanurate di(meth)acrylate, hydroxypivalic acid neopentyl glycol di(meth)acrylate, polytetramethylene glycol di(meth)acrylate, 1,3- or 1,4-butylene glycol di(meth)acrylate, 1,4-dimethyl-2,4-pentanediol di(meth)acrylate, 1,5-dimethyl-2,5-hexanediol di(meth)acrylate, 1,5-pentanediol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-, 1,2-, 2,5- or 1,5-hexanediol di(meth)acrylate, 1,7-heptanediol di(meth)acrylate, 1,8- or 1,2-octanediol di(meth)acrylate, 1,9-nonanediol di(meth)acrylate, 1,2- or 1,10-decanediol di(meth)acrylate, 1,12-dodecanediol di(meth)acrylate, 1,2- or 1,14-tetradecanediol di(meth)acrylate, 1,2- or 1,16-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2,4-diethyl-1,5-pentanediol di(meth)acrylate, 2-methyl-1,3-butylene glycol di(meth)acrylate, 2-n-butyl-2-ethyl-1,3-propanediol di(meth)acrylate, tricyclodecane dimethylol dicaprolactonate di(meth)acrylate, dimethylol dicyclopentane di(meth)acrylate, 1,6-hexanediol bis(2-hydroxy-3-(meth)acryloyloxypropyl) ether, bis(4-(meth)acryloxypolyethoxyphenyl)propane, pentaerythritol di(meth)acrylate, pentaerythritol di(meth)acrylate monostearate, pentaerythritol di(meth)acrylate monobenzoate, glycerin di(meth)acrylate, 2-hydroxy-1,3-di(meth)acryloxypropane, diethylene glycol divinyl ether, cyclohexanedimethanol divinyl ether, dipropylene glycol divinyl ether, triethylene glycol divinyl ether, trimethylolpropane divinyl ether, butanediol divinyl ether, propylene glycol divinyl ether, hexanediol divinyl ether, trimethylolpropane diallyl ether, (meth)acrylic acid vinyloxyalkyl, vinyloxyethoxyethyl (meth)acrylate, N,N'-methylenebisacrylamide, bisphenol A di(meth)acrylate, bisphenol F di(meth)acrylate, hydroxypivalyl hydroxypivalate di(meth)acrylate, hydrogenated bisphenol A di(meth)acrylate, hydrogenated bisphenol F di(meth)acrylate, divinyl benzene methylenebisacrylamide, ethylenebisacrylamide, etc., may be used; however, the selection is not specifically limited.

Also, one or more types selected from the group that consists of, for example, alkoxylated products (such as ethoxylated, propoxylated or butoxylated products, etc.) of compounds having two ethylenic unsaturated bonds, which may be ethoxylated 1,6-hexanediol di(meth)acrylate, ethoxylated neopentyl glycol di(meth)acrylate, and propoxylated neopentyl glycol di(meth)acrylate, for example, may be used; however, the selection is not specifically limited.

Furthermore, one or more types of alkylene oxide-modified products (such as ethylene oxides, propylene oxides, etc.) of compounds having two ethylenic unsaturated bonds, which may be one or more types selected from the group that consists of, for example, ethylene oxide (EO)-modified bisphenol A di(meth)acrylate, propylene oxide (PO)-modified bisphenol A di(meth)acrylate, EO-modified hydrogenated bisphenol A di(meth)acrylate, PO-modified hydrogenated bisphenol A di(meth)acrylate, EO-modified bisphenol F di(meth)acrylate, PO-modified bisphenol F di(meth)acrylate, EO-modified tetrabromobisphenol A di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, EO-modified neopentyl glycol di(meth)acrylate, PO-modified neopentyl glycol di(meth)acrylate, (meth)acrylic acid polyethylene glycol monovinyl ether, (meth)acrylic acid polypropylene glycol monovinyl ether, neopentyl glycol PO (propylene oxide)-modified di(meth)acrylate and isocyanuric acid EO-modified di(meth)acrylate, as well as one or more types of caprolactone-modified products of compounds having two ethylenic unsaturated bonds, which may be one or more types selected from the group that consists of, for example, bisphenol A tetraethylene oxide adduct dicaprolactonate di(meth)acrylate, bisphenol F tetraethylene oxide adduct dicaprolactonate di(meth)acrylate, hydroxypivalyl hydroxypivalate dicaprolactonate di(meth)acrylate, and caprolactone adduct di(meth)acrylate of hydroxypivalic acid neopentyl glycol ester, may be used; however, the selection is not specifically limited.

(Compounds Having Three Ethylenic Unsaturated Bonds)

Any known compounds having three ethylenic unsaturated bonds may be used. For example, one or more

types selected from the group that consists of glycerin tri(meth)acrylate, tetramethylolmethane triacrylate, tetramethylolpropane tri(meth)acrylate, tris(2-hydroxyethyl)isocyanurate tri(meth)acrylate, trimethylolethane tri(meth)acrylate, trimethyloloctane tri(meth)acrylate, trimethylolpropane tri(meth)acrylate, trimethylolpropane trivinyl ether, trimethylolhexane tri(meth)acrylate, pentaerythritol tri(meth)acrylate, pentaerythritol triallyl ether, pentaerythritol trivinyl ether, 1,3,5-tri(meth)acryloylhexahydro-s-triazine, dipentaerythritol tri(meth)acrylate tripropionate. isocyanuric acid tri(meth)acrylate, tris(acryloyloxy)phosphate, etc., may be used; however, the selection is not specifically limited. Also, one or more types selected from the group that consists of ethoxylated (1 to 100) trimethylolpropane tri(meth)acrylate, propoxylated (1 to 100) trimethylolpropane tri(meth)acrylate, glycerin propoxytri(meth)acrylate, trimethylolpropane tricaprolactonate tri(meth)acrylate, glycerin PO-modified tri(meth)acrylate, trimethylolpropane PO-modified tri(meth)acrylate, isocyanuric acid EO-modified tri(meth)acrylate, isocyanuric acid EO-modified ε-caprolactone-modified tri(meth)acrylate, caprolactone-modified trimethylolpropane tri(meth)acrylate and other ethoxylated, propoxylated, butoxylated or other alkoxylated products, as well as ethylene oxide-, propylene oxide- or other alkylene oxide-modified products, and caprolactone-modified products, of trifunctional monomers, etc., may be used; however, the selection is not specifically limited.

(Compounds Having Four or More Ethylenic Unsaturated Bonds)

Any known compounds having four or more ethylenic unsaturated bonds may be used. For example, one or more types selected from the group that consists of compounds having four ethylenic unsaturated bonds, compounds having five ethylenic unsaturated bonds, compounds having six ethylenic unsaturated bonds, and compounds having seven or more ethylenic unsaturated bonds, may be used. For example, one or more types selected from the group that consists of diglycerin tetra(meth)acrylate, ditrimethylolethane tetra(meth)acrylate, ditrimethyloloctane tetra(meth)acrylate, ditrimethylolbutane tetra(meth)acrylate, ditrimethylolpropane tetra(meth)acrylate, ditrimethylolpropane tetracaprolactonate tetra(meth)acrylate, ditrimethylolhexane tetra(meth)acrylate, trimethylolpropane tetra(meth)acrylate, pentaerythritol tetra(meth)acrylate, pentaerythritol tetraallyl ether, pentaerythritol tetracaprolactonate tetra(meth)acrylate, pentaerythritol tetravinyl ether, dipentaerythritol tetra(meth)acrylate, tetramethylolmethane tetra(meth)acrylate, oligoester tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol polyalkylene oxide hepta(meth)acrylate, tripentaerythritol octa(meth)acrylate, etc., may be used; however, the selection is not specifically limited. Also, one or more types selected from the group that consists of ethylene oxide-modified pentaerythritol tetra(meth)acrylate, ethoxylated pentaerythritol tetra(meth)acrylate and other ethoxylated, propoxylated, butoxylated or other alkoxylated products, as well as ethylene oxide-, propylene oxide- or other alkylene oxide-modified products, and caprolactone-modified products, of quadrafunctional or higher functional monomers, etc., may be used; however, the selection is not specifically limited.

(Epoxylated Plant Oil (Meth)acrylate Compounds)

Any known epoxylated plant oil (meth)acrylate compounds may also be used. Since epoxylated plant oil (meth)acrylates are derived from plant oils, they can increase the amount of biomass components in the active energy ray-curable ink composition.

Epoxylated plant oil (meth)acrylate compounds are obtained by (meth)acrylic-modifying epoxylated plant oils and, for example, one or more types selected from compounds that are each obtained by ring-opening-addition-polymerizing (meth)acrylic acids with the epoxy groups in epoxylated plant oils produced by epoxylating the double bonds of unsaturated plant oils with peracetic acid, perbenzoic acid, or other oxidizing agent, may be used.

Unsaturated plant oils are triglycerides whose at least one fatty acid has at least one carbon-carbon unsaturated bond, and one or more types selected from the group that consists of hempseed oil, flaxseed oil, perilla oil, oiticica oil, olive oil, cacao oil, kapok oil, kaya oil, mustard oil, apricot kernel oil, tung oil, candlenut oil, walnut oil, poppy oil, sesame oil, safflower oil, daikon seed oil, soybean oil, chaulmoogra oil, camellia oil, corn oil, rapeseed oil, niger oil, bran oil, palm oil, castor oil, sunflower oil, grapeseed oil, almond oil, pine seed oil, cottonseed oil, coconut oil, peanut oil, dehydrated castor oil, etc., may be used.

(Oligomers or Polymers)

Any known polymers or oligomers having ethylenic unsaturated bonds may be used. Among the polymers or oligomers having ethylenic unsaturated bonds, one or more types of polymers or oligomers having one or more ethylenic unsaturated bonds selected from the group that consists of (meth)acryloyl groups, vinyl groups, etc., may be used. For example, one or more types selected from the group that consists of polydiallyl phthalates, neopentyl glycol oligo-(meth)acrylates, 1,4-butanediol oligo-(meth)acrylates, 1,6-hexanediol oligo-(meth)acrylates, trimethylolpropane oligo-(meth)acrylates, pentaerythritol oligo-(meth)acrylates, urethane (meth)acrylates, epoxy (meth)acrylates, polyester

(meth)acrylates, rosin-modified epoxy (meth)acrylates, unsaturated polyesters, polyether (meth)acrylates, acrylic-based resins having unreacted unsaturated groups, unsaturated polyethers, unsaturated polyamides, unsaturated polyurethanes, acrylic-modified phenol-based resins, acrylated amine compound oligomers, etc., may be used.

(Commercial Products)

Among the commercial products of compounds having ethylenic unsaturated bonds, one or more types selected from the group that consists of, for example, the LIGHT ACRYLATE, LIGHT ESTER, EPOXY ESTER, URETHANE ACRYLATE, and HIGH-FUNCTIONAL OLIGOMER series manufactured by Kyoeisha Chemical Co., Ltd., NK-ESTER and NK-OLIGO series manufactured by Shin-Nakamura Chemical Co., Ltd., FANCRYL series manufactured by Hitachi Chemical Co., Ltd., ARONIX series manufactured by Toagosei Co., Ltd., FUNCTIONAL MONOMER series manufactured by Daihachi Chemical Industry Co., Ltd., SPECIAL ACRYLIC MONOMER series manufactured by Osaka Organic Chemical Industry Ltd., ACRYESTER and DIABEAM OLIGOMER series manufactured by Mitsubishi Chemical Corporation, KAYARAD and KAYAMER series manufactured by Nippon Kayaku Co., Ltd., (METH)ACRYLIC ACID/METHACRYLIC ACID ESTER MONOMER series manufactured by Nippon Shokubai Co., Ltd., NICHIGO-UV SHIKOH URETHANE ACRYLATE OLIGOMER series manufactured by Nippon Synthetic Chemical Industry Co., Ltd., CARBOXYLIC ACID VINYL ESTER MONOMER series manufactured by Japan Vam & Poval Co., Ltd., FUNCTIONAL MONOMER series manufactured by Kohjin Co., Ltd., EBECRYL, ACA, KRM, IRR, RDX, and OTA series manufactured by Daicel-Allnex Ltd., CN and SR series manufactured by Arkema SA, LAROMER series manufactured by BASF SE, PHOTOMER series manufactured by Cognis, ART RESIN series manufactured by Negami Chemical Industrial Co., Ltd., BLEMMER series manufactured by NOF Corporation, NEW FRONTIER series manufactured by DKS Co., Ltd., MIRAMER series manufactured by Miwon Specialty Chemical Co., Ltd., AgiSyn series manufactured by DSM Corporation, etc., may be used; however, the selection is not specifically limited.

(Content of Compounds Having Ethylenic Unsaturated Bonds)

When the active energy ray-curable ink composition contains compounds having ethylenic unsaturated bonds, they are contained by 50.0 to 99.0% by mass, or preferably 60.0 to 90.0% by mass, in the active energy ray-curable ink composition.

(Colorant)

For the colorants, any known colorants may be used without specific limitation according to the desired color tone, concealability, etc., to be added to the active energy ray-curable ink composition. For example, colorants having arbitrary color tones such as red, blue, yellow, green, purple, black, white, orange, brown, and metallics may be used.

The colorants include, for example, pigments (inorganic colored pigments, organic colored pigments, glitter pigments, fluorescent pigments, etc.), colored resin particles, dyes, etc., in powder, dispersion liquid, or solution form, and one or more types of colorants may be used to achieve a desired color tone.

Preferably dyes are not used as colorants if lightfastness, etc., will be required. The particles comprising pigments, colored resin particles, etc., may be surface-treated with rosin-based compounds, silane coupling agents, resins, pigment derivatives, and other surface treatment agents, or they may remain untreated.

Also, self-dispersing pigments, or preferably ionic self-dispersing pigments, or more preferably anionically-charged self-dispersing pigments, having at least one type of hydrophilic group or lipophilic group bonded to the pigment surface either directly or through various atomic groups, may be used.

Regarding these pigments and colored resin particles in terms of particle size, those having an appropriate particle size from the viewpoints of desired color tone, transparency, concealability, visible-light absorption coefficient, etc., may be used. For example, excellent transparency can be achieved by using pigments whose average primary particle size has been controlled to a sufficiently small level relative to visible light wavelengths (0.01 to 0.3 $\mu$m, particularly 0.01 to 0.1 $\mu$m) using any known dispersion device (such as bead mill, sand mill, kneader, two-roll mill, three-roll mill, etc.).

Among the inorganic colored pigments, one or more types selected from the group that consists of, for example, titanium oxide, zinc oxide, zinc sulfate, lead white, calcium carbonate, sedimentary barium sulfate, white carbon, alumina white, kaolin clay, talc, bentonite, aluminum hydroxide, black iron oxide, carbon black, graphite, red iron oxide, molybdenum red, molybdate orange, chrome vermillion, lead yellow, yellow iron oxide, titanium yellow, viridian, Victoria green, ultramarine blue, Prussian blue, cobalt blue, cerulean blue, cobalt silica blue, cobalt zinc silica blue, manganese violet, cobalt violet, etc., may be used; however, the selection is not limited to the foregoing.

Among the organic colored pigments, one or more types selected from the group that consists of phthalocyanine-based (such as copper phthalocyanine, halogenated copper phthalocyanine, nonmetallic phthalocyanine, etc.), threne-based, azo-based (such as azo, disazo, polyazo, etc.), quinacridone-based, anthraquinone-based (such as aminoanthraquinone, diaminodianthraquinone, anthrapyrimidine, flavanthrone, anthanthrone, indanthrone, pyranthrone, violanthrone, etc.), dioxane-based, indigo-based, thioindigo-based, perinone-based, perylene-based, indoreline-based, azomethine-based, isoindolinone-based, isoindoline-based, dioxazine-based, thioindigo-based, quinophthalone-based, metal complex-based, diketopyrrolopyrrole-based, polycyclic-based, benzimidazolone-based, anthrapyrimidine-based, nitro-based, nitroso-based, aniline black, flavanthrone-based, quinophthalone-based, pyranthrone-based, indanthrone-based, dye lake-based and other organic colored pigments, etc., may be used; however, the selection is not limited to the foregoing.

Among the glitter pigments, aluminum, bronze and other metal powders and metal foils, titanium dioxide-coated mica and other oxide-coated micas, oxide-coated glass flakes, fish scale foils, bismuth oxychloride, and other pigments having pearly luster or interference luster can be used.

Among the fluorescent pigments, pigments that use ultraviolet rays, infrared rays, and other lights of specific wavelengths as excitation energy to emit light in wavelength ranges different from the wavelengths of the excitation lights, can be used.

The colored resin particles are fine particles of mixtures of resins with one or more types selected from the group that consists of the aforementioned inorganic colored pigments, organic colored pigments, glitter pigments, dyes, and fluorescent pigments, where polyolefin-based resins, polystyrene-based resins, acrylic-based resins, urethane-based resins, polyester-based resins, polyamide-based resins, etc., may be used as the resins.

Specific examples of these inorganic colored pigments or organic colored pigments that can be used in the active energy ray-curable ink composition are listed below by each representative hue.

Among red pigments, one or more types selected from the group that consists of, for example, C. I. Pigment Red 5, 7, 9, 12, 14, 19, 22, 38, 41, 48:1, 48:2, 48:3, 48:4, 49:1, 53:1, 57, 57:1, 63:1, 81:1, 81:2, 81:3, 97, 101, 102, 112, 122, 123, 144, 146, 149, 168, 177, 178, 179, 180, 184, 185, 187, 190, 192, 200, 202, 208, 209, 210, 215, 216, 217, 220, 223, 224, 226, 227, 228, 240, 242, 246, 254, 255, 264, 270, 272, etc., may be used; however, the selection is not limited to the foregoing.

Among yellow pigments, one or more types selected from the group that consists of, for example, C. I. Pigment Yellow 1, 2, 3, 4, 5, 6, 10, 12, 13, 14, 15, 16, 17, 18, 20, 24, 31, 32, 34, 35, 35:1, 36, 36:1, 37, 37:1, 40, 42, 43, 53, 55, 60, 61, 62, 63, 65, 73, 74, 75, 77, 81, 83, 86, 87, 93, 94, 95, 97, 98, 100, 101, 104, 106, 108, 109, 110, 113, 114, 115, 116, 117, 118, 119, 120, 123, 125, 126, 127, 128, 129, 137, 138, 139, 147, 148, 150, 151, 152, 153, 154, 155, 156, 161, 162, 164, 166, 167, 168, 169, 170, 171, 172, 173, 174, 175, 176, 177, 179, 180, 181, 182, 184, 185, 187, 188, 193, 194, 199, 213, etc., may be used; however, the selection is not limited to the foregoing.

Among orange pigments, one or more types selected from the group that consists of, for example, C. I. Pigment Orange 36, 43, 51, 55, 59, 61, etc., may be used; however, the selection is not limited to the foregoing.

Among green pigments, one or more types selected from the group that consists of, for example, C. I. Pigment Green 7, 10, 36, 37, etc., may be used; however, the selection is not limited to the foregoing.

Among blue pigments, one or more types selected from the group that consists of, for example, C. I. Pigment Blue 1, 2, 3, 15, 15:1, 15:2, 15:3, 15:4, 15:6, 16, 18, 22, 27, 29, 60, 64, etc., may be used; however, the selection is not limited to the foregoing.

Among purple pigments, one or more types selected from the group that consists of, for example, C. I. Pigment Violet 1, 19, 23, 27, 29, 30, 32, 37, 40, 42, 50, etc., may be used; however, the selection is not limited to the foregoing.

Among black pigments, one or more types selected from the group that consists of, for example, C. I. Pigment Black 1, 6, 7, 12, 20, 31, etc., may be used; however, the selection is not limited to the foregoing.

Among the dyes, one or more types selected from the group that consists of, for example, water-soluble dyes, oil-soluble dyes, disperse dyes, etc., may be used, which may be one or more types selected from the group that consists of acid dyes, direct dyes, basic dyes, reactive dyes, and edible dyes.

Among the dyes, one or more types selected from the group that consists of, for example, azo-based dyes, anthraquinone-based dyes, phthalocyanine-based dyes, quinoneimine-based dyes, quinoline-based dyes, nitro-based dyes, carbonyl-based dyes, methine-based dyes, etc., may be used; however, the selection is not limited to the foregoing.

When the active energy ray-curable ink composition contains colorants, they may be contained by 1.0 to 60.0% by mass in the active energy ray-curable ink composition. By adjusting the content of the colorants in this range, any drop in image quality on the printed matters obtained from the active energy ray-curable ink composition into which the colorants are formulated, or any negative effect on the viscometric property of the active energy ray-curable ink composition, can be prevented.

(Resins)

Among the resins, any known resins may be used without specific limitation according to the properties to be added to the active energy ray-curable ink composition, especially appropriate viscoelasticity property, as well as printing properties of the ink composition constituted by the resins, and the like. For example, one or more types selected from

the group that consists of, for example, acrylic-based resins, polyester-based resins, styrene-based resins, polyolefin-based resins, epoxy-based resins, polyurethane-based resins, phenol-based resins, rosin-based resins, block polymers, graft polymers (core-shell polymers), acrylic-modified phenol-based resins, rosin-modified phenol-based resins, rosin-modified maleic acid-based resins, rosin-modified alkyd-based resins, rosin-modified petroleum-based resins, rosin ester-based resins, fatty acid-modified rosin-based resins, petroleum-based resin-modified phenol-based resins, alkyd-based resins, plant oil-modified alkyd-based resins, petroleum-based resins, hydrocarbon-based resins (polybutene, polybutadiene, etc.), fluororesins (tetrafluoroethylene (PTFE) resin waxes, etc.), may be used. It is particularly preferable that one or more types selected from the group that consists of acrylic-based resins (acrylic acid ester-styrene copolymer-based resins, etc.), styrene-based resins (styrene-acrylic acid ester copolymer-based resins, etc.), rosin-modified phenol-based resins, rosin-modified maleic acid-based resins, rosin-modified alkyd-based resins, rosin ester-based resins, fatty acid-modified rosin-based resins, alkyd-based resins and plant oil-modified alkyd-based resins, may be used.

The weight-average molecular weight of the resins is preferably 500 to 300,000. Also, their acid value is preferably 1 to 100 mgKOH/g from the viewpoints of, for example, quick drying property when active energy rays are irradiated.

When fatty acid-modified rosin-based resins or rosin-modified alkyd resins are used as the resins, the biomass degree and other properties can be improved. Preferably such active energy ray-curable ink composition is used as a printing ink composition, especially as an active energy ray-curable offset printing ink composition.

The fatty acid-modified rosin-based resins are products of reaction between fatty acid modification materials and rosin-based resins.

Among the fatty acid-modified materials, one or more types selected from the group that consists of, for example, decanoic acid, lauric acid, myristic acid, octanoic acid, palmitic acid, stearic acid, oleic acid, linolic acid, linoleic acid, recinoleic acid, eleostearic acid, acetic acid, fumaric acid, maleic acid, maleic acid anhydride, itaconic acid, citraconic acid, citraconic acid anhydride, maleic acid anhydride, acrylic acid, methacrylic acid, and other natural or synthetic fatty acids with around 2 to 30 carbon atoms; tung oil, soybean oil, flaxseed oil, castor oil, sunflower oil, safflower oil, corn oil, cottonseed oil, rice oil (rice bran oil), rapeseed oil, canola oil, perilla oil, sesame oil, camellia oil, olive oil, peanut oil, grapeseed oil, coconut oil, tall oil, palm oil, palm kernel oil, beef fat, horse oil, pig fat, chicken oil, fish oil from sardine, saury, etc., whale oil, shark oil, lanolin, mink oil, bees wax and other animal or plant-based oils; derivatives of the aforementioned animal or plant-based oils (oxidation-polymerized oils (boiled oils) or heat-polymerized oils (stand oils) from, and dehydrated products, esterified products or other modified products of, animal or plant-based oils), etc., may be used. Preferably coconut oil or others having an iodine value of 80 or higher are used, and it is particularly preferable that one or more types selected from the group that consists of coconut oil, tung oil, soybean oil, tall oil, flaxseed oil, castor oil, safflower oil, perilla oil, polymerized soybean oil, polymerized flaxseed oil, polymerized castor oil, polymerized tung oil, polymerized and dehydrated castor oil, dehydrated castor oil, soybean oil butyl ester, flaxseed oil butyl ester, tung oil butyl ester, etc., are used.

Among the rosin-based resins, one or more types selected from the group that consists of, for example, wood rosin, gum rosin, tall rosin and other unmodified rosins, polymerized rosins, disproportionated rosins, stabilized rosins and hydrogenated rosins, obtained by modifying the foregoing unmodified rosins by means of polymerization, disproportionation, stabilization, hydrogenation, etc., chemically-modified rosins resulting from, for example, introduction of various functional groups, rosin ester-based resins, rosin alcohol-based resins, rosin-based resin metal salts, etc., may be used. Preferably one or more types of unmodified rosins, polymerized rosin esters, rosin esters, disproportionated rosins, or rosin-based resin metal salts are used, and it is particularly preferable that one or more types of unmodified rosins, polymerized rosin esters, or rosin-based resin metal salts are used.

The weight-average molecular weight of the rosin-based resins, while not specifically limited, is in a range of normally 1,000 to 2,000,000, or preferably 10,000 to 150,000, or most preferably 15,000 to 100,000.

The fatty acid modification quantity (fatty acid introduction amount) of each fatty acid-modified rosin-based resin is normally 5.0 to 50.0% by mass, or preferably 10.0 to 40.0% by mass, or most preferably 10.0 to 20.0% by mass, in the fatty acid-modified rosin-based resin. If it is under 5.0% by mass, the effects of the fatty acid modification may not be sufficient and coating film curability may drop, while that exceeding 50.0% by mass may cause properties of the rosin-based resin to drop, resulting in lower coating film curability.

The rosin-modified alkyd resins are obtained by causing acid components including resin acids, fatty acids, and polybasic acids to react with polyalcohols, and their solubility parameter sp value per the turbid point titration method is 9.0 to 11.0 $(cal/cm^3)^{1/2}$ and acid value is 1 to 50 mgKOH/g.

Here, the solubility parameter sp value per the turbid point titration method is measured in accordance with the turbid point titration method which is a simple method of actual measurement, and it is a value calculated according to K. W. Suh and J. M. Corbett's formula below. For calculation of the sp value, J. Appl. Polym. Sci. 1968, 12, 2359 can be referenced.

Formula: sp value = (Vml1/2•δH+Vmh1/2•δD)/(Vml1/2+Vmh1/2)

To be specific, 0.5 g of a sample is dissolved in 10 mL of toluene or 10 mL of trimethylolpropane triacrylate (TMPTA), each being a good solvent, to which n-hexane, which is a poor solvent of low sp value, is added and a reading of titer H (mL) is obtained at a turbid point, and in the same manner, ethanol, which is a poor solvent of high sp value, is added to a toluene solution and a reading of titer D (mL) is obtained at a turbid point, after which these results are applied to the formula below to calculate Vml, Vmh, $\delta$H and $\delta$D, which are then assigned to the sp value calculation formula to obtain the sp value.

(Polymerization Initiators)

The active energy ray-curable ink composition may contain any known polymerization initiators.
The polymerization initiators are not specifically limited so long as they generate radicals or other active species when irradiated with active energy rays to cause the active energy ray-curable ink composition to start polymerizing, and one or more types selected from the group that consists of, for example, redox initiators, heat-polymerization initiators, photopolymerization initiators, etc., may be used.
Redox initiators combine peroxides and reducing agents to demonstrate a polymerization initiating function through an oxidation-reduction reaction under mild conditions.
Heat-polymerization initiators and photopolymerization initiators demonstrate a polymerization initiating function by generating radicals when irradiated with heat and active energy rays (infrared rays, ultraviolet rays, etc.), respectively.
The polymerization initiators are selected as deemed appropriate according to the application, purpose, etc., and although use of photopolymerization initiators is normally preferred, redox initiators may be used when toxicity must be considered because their toxicity is relatively lower than heat-polymerization initiators and photopolymerization initiators presenting high potential toxicity.
Of these, preferably photo-radical polymerization initiators having light absorbing properties over wavelengths of 450 to 300 nm and capable of manifesting a function as a curing reaction (radical polymerization) initiator under lights having wavelengths in this range, are used from the viewpoint of achieving good curability under ultraviolet rays from light-emitting diode (LED) light sources.
Among the photo-radical polymerization initiators, one or more types selected from the group that consists of, for example, acylphosphine oxide-based compounds, triazine-based compounds, aromatic ketone-based compounds, aromatic onium salt-based compounds, benzoin ether-based photopolymerization initiators, acetophenone-based photopolymerization initiators, $\alpha$-ketol-based photopolymerization initiators, aromatic sulfonyl chloride-based photopolymerization initiators, photoactive oxime-based photopolymerization initiators, benzoin-based photopolymerization initiators, benzyl-based photopolymerization initiators, benzophenone-based photopolymerization initiators, ketal-based photopolymerization initiators, organic peroxides, thioxanthone-based compounds, thiophenyl-based compounds, anthracene-based compounds, hexaarylbiimidazole-based compounds, ketoxime ester-based compounds, borate-based compounds, azinium-based compounds, metallocene-based compounds, active ester-based compounds, halogenated hydrocarbon-based compounds, alkylamine-based compounds, iodonium salt-based compounds, sulfonium salt-based compounds, etc., may be used.
Among the acylphosphine oxide-based compounds, one or more types selected from the group that consists of, for example, diphenyl(2,4,6-trimethylbenzoyl)phosphine oxide, phenyl(2,4,6-trimethylbenzoyl)phosphinic acid ethyl (TPO-L), 2,4,6-trimethylbenzoyl-diphenyl-phosphine oxide (OMNRAD TPO), bis(2,4,6-trimethylbenzoyl)-phenylphosphine oxide (OMNIRAD 819, BAPO), etc., may be used.
Among the triazine-based initiators, one or more types selected from the group that consists of, for example, ethoxy(2,4,6-trimethylbenzoyl)phenylphosphine oxide, 2,4,6-trichloro-s-triazine, 2-phenyl-4,6-bis(trichloromethyl)-s-triazine, 2-(p-methoxyphenyl)-4,6-bis(trichloromethyl)-s-triazine, 2-(p-tolyl)-4,6-bis(trichloromethyl)-s-triazine, 2-pipenyl-4,6-bis(trichloromethyl)-s-triazine, 2,4-bis(trichloromethyl)-6-styryl-s-triazine, 2-(naphto-1-yl)-4,6-bis(trichloromethyl)-s-triazine, 2-(4-methoxy-naphto-1-yl)-4,6-bis(trichloromethyl)-s-triazine, 2,4-trichloromethyl-(piperonyl)-6-triazine, 2,4-trichloromethyl(4'-methoxystyryl)-6-triazine, etc., may be used.
Also, one or more types selected from the group that consists of benzophenone, diethyl thioxanthone, 2-methyl-1-(4-methylthio)phenyl-2-morpholinopropane-1-one, 4-benzoyl-4'-methyldiphenyl sulfide, 1-chloro-4-propoxythioxanthone, isopropyl thioxanthone, 2-hydroxy-2-methyl-1-phenylpropane-1-one, 1-hydroxycyclohexyl phenyl ketone, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2-benzyl-2-dimethylamino-1-(morpholinophenyl)-butane-1 -one, bis-2,6-dimethoxybenzoyl-2,4,4-trimethylpentylphosphine oxide, etc., may be used.
These polymerization initiators are commercially available, and OMIRAD 907, 369, 184, 379, 819, etc., by IGM Resins B.V., TPO, DETX, etc., by Lamberti S.p.A., TAZ-204, etc., by Midori Kagaku Co., Ltd., may be used, for example.
Additionally, to promote curability under ultraviolet rays from light-emitting diode (LED) light sources, photosensitizers having light absorbing properties primarily in a wavelength range of ultraviolet rays of 400 nm or longer and manifesting a function to sensitize the curing reaction under lights having wavelengths in this range, such as anthracene-based compounds, thioxanthone-based compounds, etc., but preferably thioxanthone-based compounds, may be used together with polymerization initiators having light absorbing properties over wavelengths of 450 to 300 nm and manifesting a function as a curing reaction (radical polymerization) initiator under lights having wavelengths in this range.

When the active energy ray-curable ink composition contains polymerization initiators, their content may be determined as deemed appropriate according to the components of the active energy ray-curable ink composition, etc., such as 0.1 to 25.0% by mass, or preferably 0.1 to 15.0% by mass, or more preferably 1.0 to 15.0% by mass, in the active energy ray-curable ink composition, for example. When the content of the photopolymerization initiators is within this range, sufficient curability of the ink composition can be achieved simultaneously with good internal curability and cost, which is desirable.

Also, when photosensitizers are used together that have light absorbing properties primarily in a wavelength range of ultraviolet rays of 400 nm or longer and manifest a function to sensitize the curing reaction under lights having wavelengths in this range, their content is preferably 0 to 3.0% by mass in the active energy ray-curable ink composition, because a content exceeding 3.0% by mass represents an excessive addition that will not lead to any improvements in effects.

(Sensitizers)

The active energy ray-curable ink composition proposed by the present invention may contain sensitizers from the viewpoint of improving curability, to the extent that the effects of the present invention are not impaired. For the sensitizers, any one type may be used alone, or two or more types may be combined.

While not specifically limited, the sensitizers include thioxanthone-based, 4,4'-bis(diethylamino)benzophenone and other benzophenone-based, anthraquinone-based, coumarin-based, etc. Of these, 2,4-diethylthioxanthone, 2,4-dimethylthioxanthone, 2,4-diethylthioxanthene-9-one, 2,4-dichlorothioxanthone, 1-chloro-4-propoxythioxanthone, 2-chlorothioxanthone, 2-isopropylthioxanthone, 4-isopropylthioxanthone and other thioxanthone-based compounds, 9,10-dibutoxyanthracene, 9,10-diethoxyanthracene, 9,10-dipropoxyanthracene, 9,10-bis(2-ethylhexyloxy)anthracene, and other anthracene-based compounds, Michler's ketone, 4,4'-bis-(diethylamino)benzophenone, and other 4,4'-dialkylamino benzophenones, etc., may be listed.

Polymeric sensitizers may be used under the present invention. Thioxanthone-based polymeric sensitizers and acylphosphine-based polymeric sensitizers include OMNIPOL-TX ((2-carboxymethoxythioxanthone)-(polytetramethylene glycol 250) diester, number-averaged molecular weight: 660, manufactured by IGM Resins B.V.), while thioxanthone-based polymeric sensitizers include SPEEDCURE 7010 (molecular weight: 1839, manufactured by Lambson Group Ltd.), GENOPOL TX-1 (number-averaged molecular weight: 820, manufactured by RaHN AG), etc. Any of these may be used alone, or multiple types may be combined.

When polymeric sensitizers are contained under the present invention, curability can be improved, while volatile components remaining after curing can be reduced.

Preferably the sensitizers are contained in such a way that they account for 0.5 to 10.0 parts by mass relative to 100 parts by mass representing the total amount of all polymerizable components in the active energy ray-curable ink composition. Also, they account for more preferably 1.0 part by mass or more, or yet more preferably 1.5 parts by mass or more, or most preferably 2.0 parts by mass or more, while they account for more preferably 6.0 parts by mass or less, or yet more preferably 4.0 parts by mass or less, or most preferably 3.5 parts by mass or less.

(Polymerization Inhibitors)

The active energy ray-curable ink composition may contain any known polymerization inhibitors for the purpose of preventing polymerization during storage. For example, one or more types selected from the group that consists of p-methoxyphenol, catechol, tert-butyl catechol, butylhydroxytoluene, and other phenol-based compounds, hydroquinone, alkyl-substituted hydroquinone and other quinone-based compounds, phenothiazine, tocopherol acetate, nitrosoamine-based compounds, benzotriazole, and other triazole-based compounds, hindered amine-based compounds, octyl maleate, and other carboxylic acid alkyl ester-based compounds, etc., may be used.

When the active energy ray-curable ink composition contains polymerization inhibitors, their content may be determined as deemed appropriate according to the components of the active energy ray-curable ink composition, etc., such as 0.01 to 1.0% by mass in the active energy ray-curable ink composition.

(Surfactants)

In the active energy ray-curable ink composition proposed by the present invention, any known surfactants used in active energy ray-curable ink compositions may be used without specific limitation, according to the inkjet head, coating device, etc., to be used, such as nonionic surfactants, cationic surfactants, anionic surfactants, and betaine

surfactants, for example. Specific examples of the surfactants include polyether-modified silicone oil, polyester-modified polydimethylsiloxane, polyester-modified methylalkylpolysiloxane, and other silicone-based surfactants, fluorine-based surfactants, acetylene-based surfactants, etc., for example. Any of the surfactants may be used alone, or two or more types may be combined.

The silicone-based surfactants include BYK-307, BYK-315N, BYK-331, BYK-333, BYK-347, BYK-348, BYK-349, BYK-345, BYK-377, BYK-378, BYK-3455 (BYK-Chemie GmbH), etc.

The fluorine-based surfactants include F-410, F-444, F-533 (DIC Corporation), FS-65, FS-34, FS-35, FS-31, FS-30 (DuPont de Nemours, Inc.), etc.

The acetylene-based surfactants include DYNOL 607, DYNOL 609, OLFINE E1004, OLFINE E1010, OLFINE E1020, OLFINE PD-001, OLFINE PD-002W, OLFINE PD-004, OLFINE PD-005, OLFINE EXP. 4001, OLFINE EXP. 4200, OLFINE EXP. 4123, OLFINE EXP. 4300 (Nisshin Chemical Co., Ltd.), SURFYNOL 104E, SURFYNOL 104H, SURFYNOL 104A, SURFYNOL 104BC, SURFYNOL 104DPM, SURFYNOL 104PA, SURFYNOL 104PG-50, SURFYNOL 420, SURFYNOL 440, SURFYNOL 465 (Evonik Industries AG), etc.

In the active energy ray-curable ink composition proposed by the present invention, the percentage of the surfactants is preferably 0.005% by mass or more, or more preferably 0.01% by mass or more, from the viewpoint of lowering surface tension of the ink composition to increase its discharge stability from inkjet heads as well as ease of application from applicators, while the percentage is preferably 1.5% by mass or less, or more preferably 1% by mass or less, from the viewpoint of controlling the production of bubbles in the ink composition during blending, to increase its discharge stability.

If surface conditioners are to be contained, the content of the surface conditioners is not specifically limited; however, preferably the content is such that the surface tension of the active energy ray-curable ink composition falls between 22.0 and 30.0 mN/m, or more preferably the content is 0.10 to 1.50% by mass in the active energy ray-curable ink composition.

(Dispersants)

The active energy ray-curable ink composition may contain any known dispersants to improve dispersibility of pigments, etc., storage stability, and so on. For example, one or more types selected from the group that consists of, for example, the surfactants mentioned in (Surfactants), pigment derivatives, and polymeric dispersants (such as carbodiimide-based, polyester-based, polyamine-based, polyester amine-based, polyurethane-based, fatty acid amine-based, polyacrylate-based, polycaprolactone-based, polysiloxane-based, multichain polymeric nonionic-based, and polymeric ionic-based dispersants, etc.) may be used.

In particular, the polymeric pigment dispersants include EFKA PX4701 (manufactured by BASF SE), BYKJET-9150, BYKJET-9151, BYKJET-9170, DISPERBYK-168, DISPERBYK-190, DISPERBYK-198, DISPERBYK-2010, DISPERBYK-2012, DISPERBYK-2015 (BYK-Chemie GmbH), SMA 1440, SMA 2625, SMA 17352, SMA 3840, SMA 1000, SMA 2000, SMA 3000 (Cray Valley SA), JONCRYL 67, JONCRYL 678, JONCRYL 586, JONCRYL 611, JONCRYL 680, JONCRYL 682, JONCRYL 690, JONCRYL 819, JONCRYL-JDX 5050, EFKA 4550, EFKA 4560, EFKA 4585, EFKA 4701, EFKA 5220, EFKA 6230 (BASF SE), SOLSPERSE 20000, SOLSPERSE 27000, SOLSPERSE 36000, SOLSPERSE 41000, SOLSPERSE 41090, SOLSPERSE 43000, SOLSPERSE 44000, SOLSPERSE 46000, SOLSPERSE 47000, SOLSPERSE 54000, SOLSPERSE 56000 (Lubrizol Corporation), AJISPER PB821, AJISPERPB822, AJISPER PB824, AJISPERPB881 (Ajinomoto Fine-Techno Co., Inc.), etc.

When the active energy ray-curable ink composition contains dispersants, their content may be determined as deemed appropriate according to the components and application of the active energy ray-curable ink composition, etc.; for example, the content is preferably 1.0% by mass or higher, or more preferably 5.0% by mass or higher, while it is preferably 100% by mass or lower, or more preferably 60.0% by mass or lower, relative to the total mass of pigments, from the viewpoint of increasing pigment dispersibility and storage stability of the active energy ray-curable ink composition.

(Fillers (Extender Pigments))

The active energy ray-curable ink composition may contain any known fillers (extender pigments). For example, one or more types selected from the group that consists of talc, mica, barium sulfate, magnesium sulfate, clay, calcium carbonate, kaolinite (kaolin), silicon oxide, bentonite, ground calcium carbonate, barium carbonate, zirconium, alumina, titanium oxide, etc., may be used.

The fillers (extender pigments) may be in a powder form, or in a dispersion liquid form where it is dispersed in an appropriate solvent, and those with an average particle size of 0.001 to 100 $\mu$m, or preferably 0.01 to 50 $\mu$m, or more preferably 0.05 to 5 $\mu$m, and a BET specific surface area of 1 to 350 $m^2$/g, or preferably 10 to 70 $m^2$/g, or more preferably 20 to 50 $m^2$/g, may be used.

When the active energy ray-curable ink composition contains fillers (extender pigments), their content may be determined as deemed appropriate according to the components and application of the active energy ray-curable ink composition, etc., such as 1.0 to 30.0% by mass in the active energy ray-curable ink composition, for example.

(Waxes)

The active energy ray-curable ink composition may contain waxes with an average particle size of 8.0 μm or less. This way, when the active energy ray-curable ink composition is used as a component of a flexographic printing ink composition, scratch resistance of the ink coating film can be improved. For example, beeswax, lanolin wax, whale wax, candelilla wax, carnauba wax, rice wax, sumac wax, jojoba oil, and other animal/plant-based waxes, montan wax, ozokerite, ceresin, paraffin wax, microcrystalline wax, petrolatum, and other mineral/petroleum-based waxes, Fischer-Tropsch wax, polyethylene waxes, oxidized polyethylene waxes, oxidized polypropylene waxes, and other synthetic hydrocarbon-based waxes, montan wax derivatives, paraffin wax derivatives, microcrystalline wax derivatives, and other modified waxes, hardened castor oil, hardened castor oil derivatives, and other hydrogenated waxes, and polytetrafluoroethylene waxes may be used, for example. The average particle size of each wax is 8.0 μm or less, or preferably 6.0 μm or less, or more preferably 4.0 μm or less, or yet more preferably 2.0 μm or less. When the average particle size is 2.0 μm or less, better scratch resistance can be achieved. Also, the average particle size of the wax used may be selected as deemed appropriate according to the viscosity of the active energy ray-curable flexographic printing ink composition and anilox line count of the flexographic printing machine.

When the active energy ray-curable ink composition contains waxes, their content may be determined as deemed appropriate according to the components and application of the active energy ray-curable ink composition, etc., such as in a range of 0.5 to 5.0% by mass, or preferably in a range of 1.5 to 4.5% by mass, in the active energy ray-curable ink composition, for example.

If the wax content is under 0.5% by mass, scratch resistance tends to drop, while a content exceeding 5.0% by mass tends to reduce workability due to soiled turn rolls, etc.

<Additives>

Various additives may be added to the active energy ray-curable ink composition proposed by the present invention, to manifest various functionalities as necessary. To be specific, they include solvents, oxygen scavengers, reducing agents, fading inhibitors, anti-halation agents, fluorescent whitening agents, storage-improving agents, photostabilizers, UV absorbents, infrared-absorbing agents, surface-treatment agents, antioxidants, antiaging agents, antistatic agents, slipping agents, anti-blocking agents, crosslinking promoters, polymerization inhibitors, plasticizers, rustproofing agents, thickening agents, preservatives, pH-adjusting agents, defoaming agents, humectants, anti-bacterial/antifungal agents, etc. Also, resins that function as a vehicle but are not curable may or may not be blended in. Additionally, solvents may or may not be contained.

(UV Absorbents)

The UV absorbents include benzophenone-based UV absorbents, benzotriazole-based UV absorbents, salicylate-based UV absorbents, hydroxyphenyltriazine-based UV absorbents, cyanoacrylate-based UV absorbents, nickel complex salt-based UV absorbents, etc.

(Antioxidants)

The antioxidants include phenol-based antioxidants, amine-based antioxidants, sulfur-based antioxidants, phosphorus-based antioxidants, etc.

(Defoaming Agents)

The defoaming agents include silicone-based defoaming agents, Pluronic (registered trademark)-based defoaming agents, etc.

<Manufacturing Method>

The method for manufacturing the active energy ray-curable ink composition proposed by the present invention is not specifically limited, and any known methods may be used without limitation. For example, it may be prepared by adding all components that will constitute the active energy ray-curable ink composition, and mixing them in a wet

circulation mill, bead mill, ball mill, sand mill, attritor, roll mill, DCP mill, agitator, Henschel mixer, colloid mill, ultrasonic homogenizer, high-pressure homogenizer (Microfluidizer, Nanomizer, Ultimizer, Genus PY, DeBEE 2000, etc.), pearl mill, kneader, two-roll mill, three-roll mill, etc.

It may also be prepared by mixing pigments, pigment dispersants, and various active energy ray-curable compounds to obtain a concentrated base beforehand, and then adding active energy ray-curable compounds, polymerization initiators, and if necessary, surfactants and other additives, to the concentrated base to a desired compositional makeup.

Additionally, it may be prepared by mixing some of the components that will constitute an active energy ray-curable ink composition and then kneading them in a bead mill, sand mill, kneader, two-roll mill, three-roll mill, etc., and thereby dispersing the pigments (i.e., colored components and extender pigments), after which additives (polymerization initiators, polymerization inhibitors, waxes, and other additives, etc.) are added, and active energy ray-curable compounds and components (A), (B) are further added to adjust viscosity.

The viscosity of the active energy ray-curable ink composition proposed by the present invention is adjusted as deemed appropriate according to its application, etc.

When it is to be used as an active energy ray-curable offset printing ink composition, for example, preferably its viscosity measured by a Laray viscometer at 25°C is 10.0 to 70.0 Pa•s.

When it is to be used as an active energy ray-curable inkjet printing ink composition, for example, preferably its viscosity measured under the conditions of 25°C, 50 rpm using a type-E viscometer (product name: RE100L Viscometer, manufactured by Toki Sangyo Co., Ltd.) is 100 mPa•s or lower.

When it is to be used as an active energy ray-curable flexographic printing ink composition, for example, preferably its viscosity at 25°C is 300 to 2000 mPa•s.

The active energy ray-curable ink compositions proposed by the present invention is used by, for example, printing or applying the active energy ray-curable ink composition on a base material, and then irradiating an ultraviolet ray or other active energy ray. As a result, the active energy ray-curable ink composition on the base material (printing medium) cures quickly.

The methods by which to print or apply on a base material the active energy ray-curable ink composition proposed by the present invention include, for example, the inkjet method, blade coating method, gravure coating method, gravure offset coating method, bar coating method, roll coating method, knife coating method, air-knife coating method, comma coating method, U-comma coating method, AKKU coating method, smoothing coating method, microgravure coating method, reverse roll coating method, four- or five-roll coating method, dip coating method, curtain coating method, slide coating method, die coating method, spray coating method, etc.

(Solvents)

While the active energy ray-curable ink composition proposed by the present invention is solvent-free, solvents may be blended therein as necessary in order to, for example, lower viscosity and improve wettability on the base material. The solvents include ester-based organic solvents, ether-based organic solvents, ether ester-based organic solvents, ketone-based organic solvents, aromatic hydrocarbon solvents, nitrogen-containing organic solvents, etc. Also, the solvents include those having a boiling point of 150 to 220°C under 1 atm. Preferably use of solvents is minimized from the viewpoints of curability of the ink composition, environmental problems, etc., and in this sense the percentage of solvents is preferably 5% by mass or lower, or more preferably 2% by mass or lower, in the ink composition.

<Method for Printing Active Energy Ray-curable Ink Composition>

Regarding the method for printing the active energy ray-curable ink composition proposed by the present invention, it can be printed using the gravure printing method, flexographic printing method, inkjet printing method, etc., to obtain desired printed matters.

The active energy rays to be irradiated for curing include ultraviolet rays, electron beams, visible lights, etc., irradiated from light-emitting diodes (LEDs) as well as various lamps and electrodes. In particular, it demonstrates excellent curability under ultraviolet rays from light-emitting diodes (LEDs) as light sources.

## Examples

The present invention is explained in greater detail below by citing examples; however, the present invention is not limited to these examples alone. It should be noted that, unless otherwise specified, "%" and "part" refer to "% by mass" and "part by mass," respectively.

The materials used in the examples and comparative examples below are as follows. In the tables, the % unit for the numerical values shown in the fields relating to the respective components and totals is "% by mass."

(Application Method)

A primer was applied once on one side of a cardboard (basis weight 230 g/$m^2$) using a 0.15-mm Meyer bar.
It should be noted that this primer was prepared by adding purified water to 30 parts by mass of NeoRez R600 (polyurethane emulsion, DSM Coating Resins Ltd.) to a total of 100 parts by mass.
On top of this, the anti-migration coating agent having the compositional makeup in Example 1 per Table 1 was applied twice using a 0.15-mm Meyer bar, for an application of the standard amount. Or, the anti-migration coating agent was applied once using a 0.15-mm Meyer bar, for an application of half the amount.
On the obtained anti-migration coating agent layer, the active energy ray-curable ink composition shown in Table 2 was solid-printed at 300 dpi x 600 dpi and a Y-drive speed of 48 mm/min, to print three rectangles of 3.5 cm x 13 cm each. The applicable UV irradiation conditions are as follows: 20% pinning using Ushio's LED lamp at 48 m/min, then 50% curing with the LED lamp at a Y-drive speed of 24 m/min, followed by 10 passes of UV irradiation at 1/3 the moving speed to achieve complete curing, to obtain a sample. The pigment base in Table 2 mentioned above is shown in Table 3.
Next, an aqueous OP varnish was applied once on the cured active energy ray-curable ink composition layer using a 0.15-mm Meyer bar, and dried completely.

(Compositional Makeups of Anti-migration Coating Agents)

KUNIPIA-F: Montmorillonite (Kunimine Industries Co., Ltd.)
Etidronic acid: Dispersant
(G Polymer) OKS-1009: (Component A) Modified polyvinyl alcohol resin (Mitsubishi Chemical Corporation)
BVE8049Q: (Component A) Modified polyvinyl alcohol resin (Mitsubishi Chemical Corporation)
DF-10: (Component B) Crosslinkable modified polyvinyl alcohol resin (Japan Vam & Poval Co., Ltd.)
SAIVINOL SX-401: Acrylic resin (Saiden Chemical Industry Co., Ltd.)
Nipol SX-1707A: SBR (styrene butadiene rubber) (Zeon Corporation)
NeoRez R600: Aqueous urethane resin (Covestro Coating Resins, Inc.)
KURARAY POVAL 5-98: Polyvinyl alcohol resin (Kuraray Co., Ltd.)
IPA: Isopropyl alcohol
CHELESLITE WA: Rustproofing agent (Chelest Corporation) (Compositional Makeups of Active Energy Ray-Curable Ink Composition)
CN371 NS: Amine-modified (meth)acrylate oligomer (SARTOMER CN371 NS, Sartomer-Arkema SA)
(EO)TMPTA: Trimethylolpropane EO-modified triacrylate
HDDA: 1,6-hexanediol diacrylate
DPGDA: Dipropylene glycol diacrylate
TPO: Photopolymerization initiator 2,4,6-trimethylbenzoyl-diphenyl-phosphine oxide
BAPO (OMNIRAD 819): Photopolymerization initiator bis(2,4,6-trimethylbenzoyl)phenoxyphosphine oxide (IGM Resins B.V.)
DETX: 2,4-diethylthioxanthene-9-one
METHOQUINONE: Hydroquinone-based polymerization inhibitor (Seiko Chemical Co., Ltd.)
BYK-331: Silicone-based surface conditioner (BYK-Chemie GmbH)
127EPS: Phthalocyanine blue (Dainichiseika Color & Chemicals Mfg. Co., Ltd.)
S36000: Water-soluble polymer dispersant (SOLSPERSE S36000, Lubrizol Corporation)

[Table 1]

| | Examples | | | | | | Comparative Examples | | | | | |
|---|---|---|---|---|---|---|---|---|---|---|---|---|
| | 1 | 2 | 3 | 4 | 5 | 6 | 1 | 2 | 3 | 4 | 5 | 6 |
| KUNIPIA-F | 2.00% | 1.20% | 1.20% | 1.20% | 0.00% | 1.20% | 1.20% | 1.20% | | | | |
| Etidronic acid | 0.10% | 0.06% | 0.06% | 0.06% | 0.00% | 0.06% | 0.06% | 0.06% | | | | |
| OKS-1009 | 3.00% | 5.00% | 2.00% | 10.00 % | 6.00% | | 0.50% | 15.00% | | | | |
| BVE8049Q | | | | | | 5.00% | | | | | | |
| DF-10 | 3.00% | | | | | | | | | | | |
| SAIVINOL SX-401 | | | | | | | | | 5.00% | | | |
| Nipol SX-1707A | | | | | | | | | | 5.00% | | |
| NeoRez R600 | | | | | | | | | | | 5.00% | |
| KURARY POVAL 5-98 | | | | | | | | | | | | 5.00% |
| IPA | 20.00 % | 1.00% | 1.00% | 1.00% | 1.00% | 1.00% | 1.00% | 1.00% | 1.00% | 1.00% | 1.00% | 1.00% |
| Water | 71.89 % | 92.20 % | 95.20 % | 87.20 % | 92.50 % | 92.20 % | 96.70 % | 82.20% | 93.50 % | 93.50 % | 93.50 % | 93.50 % |
| CHELESLITE WA | | 0.50% | 0.50% | 0.50% | 0.50% | 0.50% | 0.50% | 0.50% | 0.50% | 0.50% | 0.50% | 0.50% |
| Ammonia water | 0.01% | | | | | | | | | | | |
| Total | 100.0% | | | | | | | | | | | |
| Viscosity (sec) (Zahn cup #4) | | 12.0 | 9.0 | 25.0 | 14.0 | 13.0 | 10.0 | 66.0 | 14.0 | 20.0 | 15.0 | 18.0 |
| Surface tension (mN/m) | | 55.0 | 57.0 | 54.0 | 54.0 | 52.0 | 50.0 | 0.0 | 55.0 | 56.0 | 52.0 | 51.0 |
| Migration amount (ppb) | | 80 | 85 | 70 | 88 | 85 | 650 | Could not be applied. | 800 | 880 | 820 | 980 |

(Viscosity)

Each anti-migration coating agent was measured for viscosity (sec) at 25°C using a Zahn cup #4 manufactured by Rigo Co., Ltd.

(Surface Tension)

Surface tension was measured at a temperature of 25°C using an automatic surface tensiometer (product name: DY-300) manufactured by Kyowa Interface Science Co., Ltd.

(Migration Amount)

1. Place 4 g of TENAX (solid mock food) (LABC-Labortechnik GmbH) in a petri dish and place the sample obtained above on top (so that its non-printed side contacts TENAX).
2. Place a lid on the petri dish and flip it upside down. (TENAX now sits on top of the sample.)
3. Let the sample stand at 60°C for 10 days.
4. Collect TENAX into a triangle flask.
5. Put 20 mL of acetone in the flask and shake it.
6. After approx. 5 minutes, filter the supernatant. Put the filtrate in a 50-mL measuring flask.
7. Put 20 mL of acetone in the flask again and shake it.
8. After approx. 5 minutes, perform filtration. Put the filtrate in the same 50-mL measuring flask used in 6.
9. Put 5 mL of 200-ppm ethyl octanoate solution in a 5-mL measuring flask. (Ethyl octanoate is an internal standard used for quantitative determination.)
10. Add acetone to the measuring flask to a constant volume of 50 mL.
11. The obtained solution was analyzed by gas chromatography mass spectrometry (GC/MS) and the migrated amount (ppb) was measured. Also, the area and concentration were measured at the peaks shown in Table 4 below.

[Table 2]

| Active energy ray-curable ink composition | |
|---|---|
| CN371 NS | 10.00% |
| (EO)TMPTA | 15.00% |
| HDDA | 15.20% |
| DPGDA | 10.00% |
| Triethylene glycol divinyl ether | 3.00% |
| 4-hydroxybutyl acrylate | 16.70% |
| Polyethylene glycol diacrylate | 10.00% |
| TPO | 3.00% |
| BAPO | 2.50% |
| DETX | 1.00% |
| METHOQUINONE | 0.40% |
| BYK-331 | 0.20% |
| Pigment base | 13.00% |
| Total | 100.0% |

[Table 3]

| Pigment base | |
|---|---|
| 127EPS | 2.60% |
| S36000 | 1.04% |
| HDDA | 3.36% |
| Ethyl carbitol acrylate | 6.00% |
| Total | 13.0% |

[Table 4]

| | Test sample 1 | Test sample 2 | Test sample 3 | Test sample 4 |
|---|---|---|---|---|
| Anti-migration coating agent | None | Standard amount | Standard amount | Half the amount |
| Active energy ray-curable ink composition | Applied | Applied | Applied | Applied |
| Unknown monomer (11.94 min.) peak area | 81,380 | - | - | - |
| Ethyl octanoate (internal standard) peak area | 745,456 | 437,413 | 429,229 | 437,365 |
| Unknown monomer (13.60 min.) peak area | 295,688 | - | - | - |
| Unknown monomer (15.21 min.) peak area | 129,567 | - | - | - |
| HDDA peak area | 2,497,363 | - | - | - |
| Unknown monomer (11.94 min.) concentration | 228 ppb | - | - | - |
| Unknown monomer (13.60 min.) concentration | 829 ppb | - | - | - |
| Unknown monomer (15.21 min.) concentration | 363 ppb | - | - | - |
| HDDA concentration | 7,002 ppb | - | - | - |

On test sample 1 prepared by applying the active energy ray-curable ink composition without applying any anti-migration coating agent, each unknown monomer and HDDA were detected, indicating that migration had occurred.

By contrast, on test samples 2 to 4 prepared by applying the active energy ray-curable ink composition after applying each anti-migration coating agent, none of each unknown monomer and HDDA were detected. These results indicate that migration did not occur.

## Claims

1. An anti-migration coating agent containing a polyvinyl alcohol-based copolymer resin having a structural unit expressed by formula (1) below in a molecule (component A), and a polyvinyl alcohol-based (co)polymer resin having carbonyl groups in a molecule (component B).

[Chem. 1]

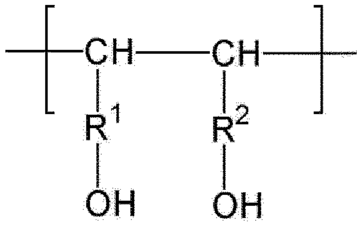

(1)

(in formula (1), $R^1$ and $R^2$ each independently represent a hydrocarbon group with 1 to 3 carbon atoms.)

**2.** The anti-migration coating agent according to claim 1, satisfying conditions 1 to 3 below.

Condition 1: When a mass of component A, and a mass of component B, contained in the anti-migration coating agent, are given by WA and WB, respectively, WA/WB is 80/20 to 20/80.
Condition 2: Only when crosslinking agents are contained, and when a mass of the crosslinking agents contained in the anti-migration coating agent is given by WC, WB/WC is 95/5 to 60/40.
Condition 3: Only when inorganic layered materials are contained, and when a mass of the inorganic layered materials contained in the anti-migration coating agent is given by WD, (WA+WB)/WD is 95/5 to 70/30.

**3.** The anti-migration coating agent according to claim 1 or 2, wherein component A is a saponified product of vinyl ester-based monomers and a copolymer comprising radical polymerizable monomers including radical polymerizable monomers expressed by formula (2) below.
[Chem. 2]

$$R^3O\text{-}R^1\text{-}CH{=}CH\text{-}R^2\text{-}OR^4 \qquad (2)$$

(in formula (2), $R^1$ and $R^2$ each independently represent a hydrocarbon group with 1 to 3 carbon atoms, $R^3$ and $R^4$ each independently represent a hydrogen atom or $-COR^5$ group, and $R^5$ represents a hydrocarbon group with 1 to 8 carbon atoms that may also have halogen groups, hydroxyl groups, ester groups, carboxylic acid groups, or sulfonic acid groups.)

**4.** The anti-migration coating agent according to any one of claims 1 to 3, wherein component A is a polyvinyl alcohol-based copolymer resin expressed by formula (3) below.

[Chem. 3]

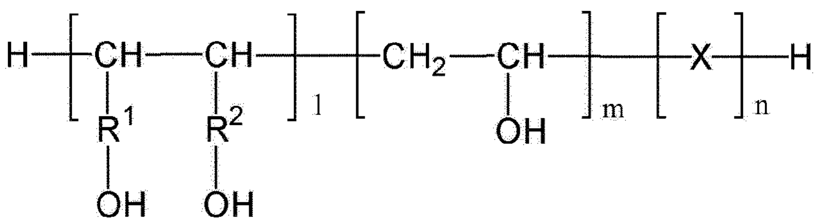

(3)

(in formula (3), $R^1$ and $R^2$ each independently represent a hydrocarbon group with 1 to 3 carbon atoms, and X represents a structural unit which is derived from a molecular structure comprising radical polymerizable monomers including radical polymerizable monomers expressed by formula (2) and vinyl ester-based monomers, and which is different from other repeating structural units in formula (3); and l, m, and n each represent an average number of structural units per molecule, where relationships of $l+m+n = 300$ to $4000$, $l/(l+m+n) = 0.001$ to $0.200$, $m/(l+m+n) = 0.700$ to $0.999$, and $n/(l+m+n) = 0$ to $0.100$ are satisfied.)

**5.** The anti-migration coating agent according to any one of claims 1 to 4, wherein component B is a vinyl alcohol-based (co)polymer resin satisfying condition 4 and/or condition 5 below.

Condition 4: It is a saponified product of a copolymer comprising radical polymerizable monomers including vinyl ester-based monomers and carbonyl group-containing radical polymerizable monomers.

Condition 5: It is an acetoacetylated product of a saponified product of a (co)polymer comprising radical polymerizable monomers including vinyl ester-based monomers.

**6.** The anti-migration coating agent according to claim 4, wherein component B is a polyvinyl alcohol-based (co)polymer resin containing, in a molecule, structural units expressed by formula (4) below and/or structural units expressed by formula (5) below.

[Chem. 4]

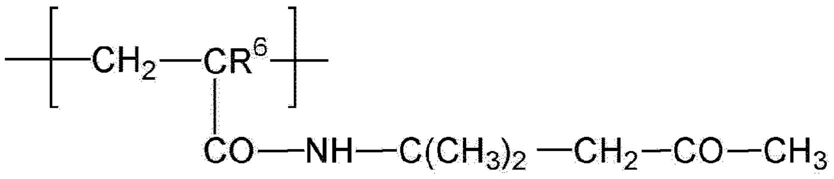

(4)

[Chem. 5]

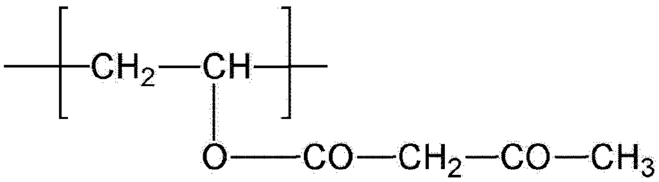

(5)

(in formula (4), $R^6$ represents hydrogen or a methyl group.)

**7.** The anti-migration coating agent according to claim 5 or 6, wherein component B is a polyvinyl alcohol-based (co)polymer resin expressed by formula (6) below.

[Chem. 6]

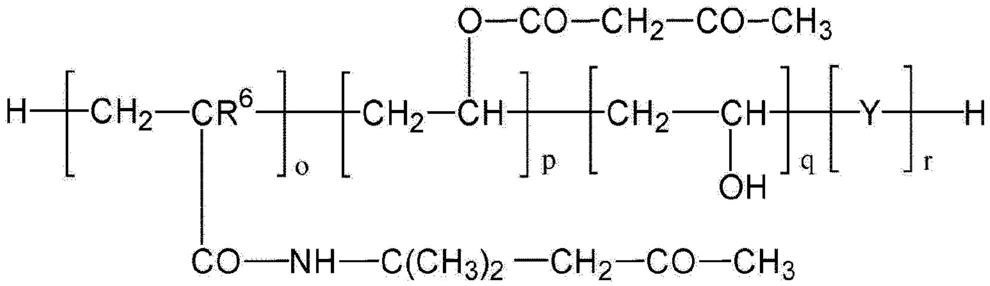

(6)

(in formula (6), $R^6$ represents hydrogen or a methyl group. And Y represents a structural unit which is derived from a molecular structure of any of the radical polymerizable monomers including the vinyl ester-based monomers and/or carbonyl group-containing radical polymerizable monomers, and which is different from other repeating structural units in formula (6). And o, p, q, and r each represent an average number of structural units per molecule, where relationships of o+p+q+r = 300 to 4000, (o+p)/(o+p+q+r) = 0.001 to 0.250, q/(o+p+q+r) = 0.550 to 0.999, and r/(o+p+q+r) = 0 to 0.200 are satisfied.)

**8.** The anti-migration coating agent according to any one of claims 1 to 7, further containing inorganic layered materials.

**9.** The anti-migration coating agent according to any one of claims 1 to 8, containing organic phosphorus compounds.

**10.** The anti-migration coating agent according to any one of claims 1 to 9, not containing crosslinking agents.

**11.** The anti-migration coating agent according to any one of claims 1 to 10, further containing crosslinking agents.

**12.** The anti-migration coating agent according to any one of claims 1 to 11, for undercoating before active energy ray-curable ink compositions are applied.

**13.** A laminate constituted by providing, on a base material, a layer formed by the anti-migration coating agent according to any one of claims 1 to 12.

**14.** An anti-migration coating agent containing a polyvinyl alcohol-based copolymer resin having a structural unit expressed by formula (1) below in a molecule (component A), or a polyvinyl alcohol-based (co)polymer resin having carbonyl groups in a molecule (component B).

[Chem. 1]

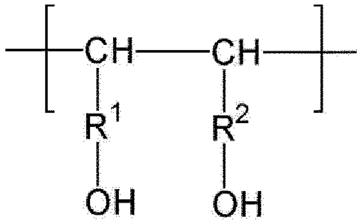

(1)

(in formula (1), $R^1$ and $R^2$ each independently represent a hydrocarbon group with 1 to 3 carbon atoms.)

**15.** The anti-migration coating agent according to claim 14, further containing inorganic layered materials and satisfying condition A below:
Condition A: When a mass of component A or component B, and a mass of the inorganic layered materials, contained in the anti-migration coating agent, are given by WAB and WD, respectively, WAB/WD is 90/10 to 62/38.

**16.** A laminate constituted by providing, on a base material, a layer formed by the anti-migration coating agent according to claim 14 or 15.

## INTERNATIONAL SEARCH REPORT

International application No.
**PCT/JP2022/010170**

**A. CLASSIFICATION OF SUBJECT MATTER**

***C09D 129/04***(2006.01)i; ***B32B 27/30***(2006.01)i; ***C09D 5/00***(2006.01)i; ***C09D 7/61***(2018.01)i; ***C09D 7/63***(2018.01)i; ***C09D 11/101***(2014.01)i
FI: C09D129/04; C09D5/00 D; C09D7/61; C09D7/63; C09D11/101; B32B27/30 102

According to International Patent Classification (IPC) or to both national classification and IPC

**B. FIELDS SEARCHED**

Minimum documentation searched (classification system followed by classification symbols)

C09D129/04; B32B27/30; C09D5/00; C09D7/61; C09D7/63; C09D11/101

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2013/146155 A1 (MITSUBISHI PLASTICS INC) 03 October 2013 (2013-10-03) claims, example 21, paragraph [0009] | 14-16 |
| A | claims, example 21, paragraph [0009] | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 April 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/010170**

| Patent document cited in search report | Publication date (day/month/year) | Patent family member(s) | Publication date (day/month/year) |
|---|---|---|---|
| WO 2013/146155 A1 | 03 October 2013 | CN 104204049 A | |
| | | EP 2792701 A1 claims, example 21, paragraph [0009] | |
| | | JP 2013-199044 A | |
| | | JP 2014-133400 A | |
| | | JP 2014-141558 A | |
| | | KR 10-2014-0147806 A | |
| | | US 2014/0322552 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6093133 A
- JP 2005288948 A
- JP 2006176589 A


### Non-patent literature cited in the description


- *J. Appl. Polym. Sci.,* 1968, vol. 12, 2359